# EUROPÄISCHE PATENTSCHRIFT

(11) **EP 3 698 098 B1**
(45) Veröffentlichungstag und Bekanntmachung des Hinweises auf die Patenterteilung: **11.12.2024**
(21) Anmeldenummer: 18786289.1
(22) Anmeldetag: 11.10.2018
(51) Int. Cl.: F42B 3/195, F42B 3/198

(54) **ANZÜNDER FÜR EINEN GASGENERATOR UND VERFAHREN ZUR HERSTELLUNG EINES ANZÜNDERS**
IGNITER FOR A GAS GENERATOR AND METHOD FOR PRODUCING AN IGNITER
ALLUMEUR POUR UN GÉNÉRATEUR DE GAZ ET PROCÉDÉ SERVANT À FABRIQUER UN ALLUMEUR

(30) Priorität: 18.10.2017 DE 102017124292
(43) Veröffentlichungstag der Anmeldung: 26.08.2020
(73) Patentinhaber: ZF Airbag Germany GmbH, 84544 Aschau a. Inn (DE)
(72) Erfinder: MÜLLER, Werner, 84453 Mühldorf am Inn (DE); MANGOLD, Rolf, 73577 Ruppertshofen (DE); MEHNERT, Bernhard, 85560 Ebersberg (DE)
(74) Vertreter: ZF LIFETEC Intellectual Property
(86) Internationale Anmeldenummer: PCT/EP2018/077730
(87) Internationale Veröffentlichungsnummer: WO 2019/076725

(56) Entgegenhaltungen:
- EP-A2- 2 431 703
- WO-A1-2014/064497
- WO-A1-2016/078634

## Beschreibung

Die Erfindung betrifft einen Anzünder für einen Gasgenerator und ein Verfahren zur Herstellung eines Anzünders.

Anzünder werden in einem Gasgenerator verwendet, um ein darin enthaltene gaserzeugendes Material, beispielsweise ein pyrotechnisches Mittel, durch einen elektrischen Impuls zu aktivieren, insbesondere anzuzünden.

Gasgeneratoren kommen beispielsweise in Fahrzeugen zum Einsatz, wo sie Füllgas für aufblasbare Gassäcke, als Mikrogasgenerator eine Bewegungsenergie für Gurtstraffer liefern, oder als Aktuator in einem Sicherheitssystem, wie z.B. ein Motorhabenaufsteller oder ein Trennelement für einen Batterieanschluss, wirken.

Klassisch umfasst ein derartiger Anzünder einen sogenannten Polkörper, auch als Header bezeichnet, der zwei metallische, elektrisch leitende Anschlusspins sowie eine Halterung aufweist, die die beiden Anschlusspins fixiert. Die beiden Anschlusspins sind durch ein elektrisch isolierendes Medium voneinander getrennt.

Die beiden Anschlusspins werden durch einen elektrisch leitfähigen Brückendraht miteinander verbunden, der in Kontakt mit einer pyrotechnischen Anzündladung ist. Diese ist in einer Kappe aufgenommen und wird durch diese gekapselt. Der Polkörper kann mit einem Befestigungsabschnitt gefasst sein, mit dem der Anzünder im Gasgenerator montierbar ist und der auch eine elektrische Anschlussmöglichkeit zur Kontaktierung der beiden Anschlusspins durch einen Stecker von außerhalb des Gasgenerators bereitstellen kann.

Generell ist es bekannt, eine Halterung des Polkörpers durch einen Metallring zu bilden und eine elektrische Isolierung durch eine Glasmasse bereitzustellen, die zunächst in flüssiger Form in dem Metallring vorhanden ist und in der zumindest einer der Anschlusspins fixiert wird, insbesondere dadurch, dass die flüssige Glasmasse spezifisch abgekühlt wird. Derartige Polkörper aus einem Metallring mit Isolierdurchführungen aus Glas sind auch als sogenannte GTMS-Header (GTMS: Glass To Metal Seal) bekannt. Ein bekannter GTMS-Header ist beispielsweise in der US 5,404,263 gezeigt. Die Fertigung ist aufwendig und teuer.

Als Alternative ist es bekannt, zwei Anschlusspins mit einer Kunststoffmasse zu umspritzen, die dann die Anschlusspins fixiert und zusätzlich den Befestigungsabschnitt des Anzünders bildet. Bei diesen im Wesentlichen aus Kunststoff gebildeten Polkörpern ist zwar der Herstellungsprozess preiswert, jedoch ist es aufwendig, die gewünschte mechanische Festigkeit und Dichtigkeit sicherzustellen.

Aus der Druckschrift WO 2016/078634 A1 ist ein Anzünder für einen Gasgenerator nach dem Oberbegriff des Anspruchs 1 bekannt, welcher einen Polkörper hat, der wenigstens einen Anschlusspin, einen Haltering sowie einen Isolierring umfasst, wobei der Isolierring den wenigstens einen Anschlusspin von dem Haltering beabstandet und gegenüber diesem elektrisch isoliert, und wobei der Haltering aus einem Metall und der Isolierring aus einem Kunststoff besteht.

Aufgabe der Erfindung ist es, einen Anzünder und ein Verfahren zur Herstellung eines Anzünders zu schaffen, die die Nachteile im Stand der Technik überwinden und die bei einer wenig aufwendigen Fertigung einen mechanisch stabilen und gut gedichteten Anzünder schaffen.

Diese Aufgabe wird mit einem Anzünder mit den Merkmalen des Vorrichtungsanspruchs 1 und/oder des Verfahrensanspruchs 7 gelöst. Ein Anzünder für einen Gasgenerator hat einen Polkörper, der wenigstens einen Anschlusspin, einen Haltering sowie einen Isolierring umfasst, wobei der Isolierring den wenigstens einen Anschlusspin von dem Haltering beabstandet und gegenüber diesem elektrisch isoliert, und wobei der Haltering aus einem Metall, und der Isolierring aus einem Kunststoff besteht, und wobei der Haltering, Isolierring und wenigstens eine Anschlusspin in einem Prägeschritt, bei dem Haltering, Isolierring und Anschlusspin unter Verformung zumindest des Halterings fest und spielfrei miteinander verbunden sind, verprägt sind. Aufgrund dieser Konstruktion kann der Polkörper zunächst separat in einem kostengünstigen Verfahren hergestellt werden, wobei die Verwendung des Halterings aus Metall eine mechanisch stabile und luftdichte Durchführung des Anschlusspins zur Außenseite des Anzünders ermöglicht.

Vorzugsweise haben der Haltering und der Isolierring entlang bzw. parallel einer Längsachse des Anzünders im Wesentlichen die gleichen Abmessungen, sodass der Polkörper ein kompaktes, geometrisch einfaches Bauteil bildet.

Der Polkörper für den Anzünder für den Gasgenerator umfasst wenigstens einen Anschlusspin, einen Haltering aus einem Metall sowie einen Isolierring aus einem Kunststoff, wobei der Isolierring den wenigstens einen Anschlusspin von dem Haltering beabstandet und gegenüber diesem elektrisch isoliert, und wobei der Isolierring ein separat vorgefertigtes Bauteil ausbildet.

Ein solcher Polkörper ist so gestaltet, dass in Draufsicht der wenigstens eine Anschlusspin vom Isolierring und der Isolierring vom Haltering umgeben ist. Eine elektrische Isolierung sowie eine Abdichtung bzw. Dichtung zwischen Haltering und dem wenigstens einen Anschlusspin wird vorteilhaft allein durch den Isolierring und dessen Kontakt zu dem Haltering und dem wenigstens einen Anschlusspin erreicht.

Vorzugsweise kann der erfindungsgemäße Anzünder einen von dem Isolierring separaten Befestigungsabschnitt aus Kunststoff, in den zumindest der wenigstens eine Anschlusspin abschnittsweise eingebettet ist, aufweisen. Hierdurch kann eine nachträgliche teilweise Einbettung des Polkörpers in den Befestigungsabschnitt stattfinden, insbesondere durch Gießen oder Spritzgießen, wobei sich ein weiter Gestaltungsspielraum mit günstigen Fertigungskosten ergibt. Um die mechanische Verbindung und die Dichtwirkung zu verbessern weist vorzugsweise eine äußere Umfangsfläche des Isolierrings und eine innere Umfangsfläche des Halterings komplementäre Strukturierungen auf, die ineinandergreifen. Die Strukturierungen können eine Art einfache Labyrinthstruktur bilden und können bezüglich der Längsachse des Polkörpers bzw. des Anzünders Hinterschnitte aufweisen.

Alternativ oder zusätzlich sind derartige komplementäre Strukturierungen auch an einer äußeren Umfangsfläche des Anschlusspins sowie einer inneren Umfangsfläche des Isolierrings vorgesehen.

Der Isolierring ist vorteilhaft sozusagen sowohl mit dem Haltering als auch mit dem Anschlusspin über diese Strukturierungen verzahnt, sodass er bezüglich der Längsachse des Polkörpers bzw. des Anzünders nicht gegenüber dem Haltering und/oder dem Anschlusspin verschiebbar ist.

Der Isolierring weist beispielsweise eine Durchführungsöffnung auf, durch die sich ein anzünderseitiges Ende des Anschlusspins, insbesondere eines ersten Anschlusspins, erstreckt, wobei vorzugsweise ein weiterer Anschlusspin, insbesondere ein zweiter Anschlusspin, an dem Haltering elektrisch leitend befestigt ist. Dieses anzünderseitige Ende des Anschlusspins endet im Wesentlichen in der Ebene, die durch die Fläche des Isolierrings und des Halterings gebildet ist, wobei hier insbesondere die sich im Wesentlichen miteinander deckenden Flächen bzw. Oberflächen des Isolierrings und des Halterings gemeint ist, welche dazu vorgesehen sind, in einem bestimmten Bereich ein elektrisch leitfähiges Element, insbesondere einen Brückendraht, aufzunehmen, welches eine pyrotechnische Anzündladung aktivieren kann. Der weitere Anschlusspin, insbesondere der zweite Anschlusspin, kann vorzugsweise durch Schweißen oder Löten an der axialen Stirnfläche des Halterings befestigt sein, welche der Oberfläche des Halterings, die den Brückendraht aufnimmt, gegenüber liegt.

Normalerweise bestehen beide Anschlusspins aus einem elektrisch leitfähigen Material, herkömmlich aus einem Metall, wobei sie noch mit einer äußeren Goldschicht zumindest teilweise überzogen sein können.

Gemäß der vorliegenden Erfindung ist es aber auch möglich, dass der Isolierring zwei Durchführungsöffnungen aufweist, durch die sich die anzünderseitigen Enden zweier nebeneinander angeordneter Anschlusspins, insbesondere eines ersten und eines zweiten Anschlusspins, erstrecken.

Für den Fall, dass der Isolierring nur eine Durchführungsöffnung aufweist, durch die sich das anzünderseitiges Ende des Anschlusspins, insbesondere des ersten Anschlusspins, erstreckt, ist am anzünderseitigen Ende dieses Anschlusspins das elektrisch leitfähige Element, insbesondere ein Brückendraht mit einem spezifischen Widerstand, mit einem seiner beiden Enden befestigt., wobei sich das elektrisch leitfähige Element bei Stromdurchfluss stark erhitzen und die angrenzende pyrotechnische Anzündladung entzünden kann. Das andere Ende dieses elektrisch leitfähigen Elements ist mit dem Haltering elektrisch leitend verbunden, insbesondere dort angeschweißt. In diesem Fall ist der weitere Anschlusspin, insbesondere der zweite Anschlusspin, an dem Haltering elektrisch leitend fixiert.

Für den Fall, dass der Isolierring zwei Durchführungsöffnungen aufweist, durch die sich die anzünderseitigen Enden der nebeneinander angeordneter Anschlusspins, insbesondere die des ersten und des zweiten Anschlusspins, erstrecken, ist das andere Ende dieses elektrisch leitfähigen Elements direkt mit dem anzünderseitigen Ende des zweiten Anschlusspins elektrisch leitend verbunden, sodass in diesem Fall die beiden anzünderseitigen Enden der beiden Anschlusspins direkt miteinander elektrisch leitend durch das elektrisch leitende Element verbunden sind.

Bei der vorliegenden Erfindung muss der Isolierring in Radialrichtung nur so breit ausgebildet sein, dass er eine ausreichende elektrische Isolierwirkung entfaltet. Es ist möglich, dass in Radialrichtung der Haltering eine größere Wanddicke aufweist als der Isolierring.

In einer bevorzugten Ausführungsform ist der Isolierring ein vorgefertigtes Bauteil, das zwischen Haltering und Anschlusspin eingesetzt wird. Der Isolierring kann z.B. ein separat allein für sich hergestelltes Bauteil sein, wie beispielsweise ein Spritzguss- Guss- oder Stanzteil sein oder in einem 3D-Druckverfahren oder durch ein durch ein Extrusionsverfahren hergestelltes Bauteil. Dies ermöglicht ein einfaches Hantieren bei der Montage des Anzünders bzw. des Polkörpers, indem beispielsweise der Isolierring als Schüttgut an einer Fertigungslinie bereitgestellt und dann vereinzelt und ohne großen Aufwand zugeführt werden kann.

Es ist auch möglich, dass wenigstens ein Anschlusspin aus zwei separaten Bauteilen, einem ersten Kontaktabschnitt und einem zweiten Kontaktabschnitt, ausgebildet ist, welche fest miteinander elektrisch leitend verbunden, insbesondere verschweißt, verlötet oder verklebt, sind. Insbesondere ist dabei der erste Kontaktabschnitt von dem bzw. einem Isolierring zumindest teilweise entlang seiner Längserstreckung umgeben bzw. umschlossen, wobei der zweite Kontaktabschnitt im Wesentlichen frei von einer derartigen Umschließung ist. Dabei ist also ein zuvor beschriebener Anschlusspin nicht aus einem einzigen bekannten länglichen Bauteil aus Metall ausgebildet, sondern umfasst mindestens zwei Bauteile, welche miteinander elektrisch leitend verbunden sind und in ihrer Gesamtheit einen Anschlusspin ausbilden. Vorzugsweise sind dabei der erste und zweite Kontaktabschnitt aus demselben Material, insbesondere einem zur Verwendung für einen Anschlusspin bekannten Metall, ausgebildet. Vorzugsweise sind der erste und zweite Kontaktabschnitt dabei als geradlinige sich axial längserstreckende stabförmige bzw. im Wesentlichen zylinderförmige Drahtelemente ausgebildet, wobei beide Kontaktabschnitte vorzugsweise in dem Bereich, in dem sie elektrisch leitend miteinander verbunden sind, komplementäre Verbindungsflächen bzw. Verbindungskonturen aufweisen, sodass sie sich in diesem Bereich optimal verbinden, insbesondere verschweißen, verlöten oder verkleben, lassen. Vorteilhaft weist dabei der erste Kontaktabschnitt an seinen beiden gegenüberliegenden Stirnflächen jeweils eine planare Fläche auf, welche im Wesentlichen senkrecht zu der Längsachse des ersten Kontaktabschnitts ausgebildet ist. Der zweite Kontaktabschnitt weist vorteilhaft nur an einem axialen Ende eine Stirnfläche mit einer planaren Fläche auf, welche komplementär zu der Stirnfläche des ersten Kontaktabschnitts, mit der sie verbunden ist, ausgebildet ist, um mit dieser optimal fluchtend verbunden werden zu können. Der zweite Kontaktabschnitt weist an dem axial gegenüberliegenden anderen Ende jedoch ein abgerundetes bzw. kalottenförmiges Ende auf, welches geeignet ist, an einen Steckverbinder bzw. Stecker zur elektrischen Verbindung des Anzünders mit einem Steuergerät angeschlossen zu werden.

Zusammenfassend ausgedrückt ist der erste Kontaktabschnitt mit dem zweiten Kontaktabschnitt axial fluchtend verbunden, sodass dadurch ein Anschlusspin ausgebildet ist, der die beiden Kontaktabschnitte umfasst und der im Wesentlichen eine durchgehende sich längserstreckende stabförmige bzw. im Wesentlichen zylinderförmige Form bzw. Kontur ausbildet.

Die oben genannte Aufgabe wird auch mit einem Verfahren zur Herstellung eines Anzünders für einen Gasgenerator mit den in Anspruch 9 angegebenen Schritten erreicht. Bei diesem Verfahren zur Herstellung eines Anzünders für einen Gasgenerator werden die folgenden Schritte durchgeführt:
- Bereitstellen wenigstens eines Anschlusspins, eines Halterings aus einem Metall sowie einem Isolierring aus einem Kunststoff,
- Ineinanderstecken des Anschlusspins, des Isolierrings und des Halterings, sodass der Anschlusspin vom Isolierring und der Isolierring vom Halterring umgeben ist, und
- Verprägen von Haltering, Isolierring und Anschlusspin in einem Prägeschritt, bei dem Haltering, Isolierring und Anschlusspin unter Verformung zumindest des Halterings fest und spielfrei miteinander verbunden werden.

Haltering, Isolierring und Anschlusspin sind jeweils separat vorgefertigte Teile, deren Maße auch beim Prägeschritt nicht wesentlich verändert werden. In Axialrichtung und Radialrichtung können sich insbesondere der Haltering und gegebenenfalls der Isolierring beispielsweise um etwa 10 % bis 30 % in ihren Abmessungen verändern. Der Anschlusspin verformt sich vorzugsweise während des Prägeschritts nur unwesentlich.

Im Prägeschritt kann eine in Axialrichtung wirkende Kraft auf den Haltering, den Isolierring und den Anschlusspin aufgebracht werden. Es ist aber auch möglich, zusätzlich eine Radialkraft aufzuwenden. Allgemein erfolgt im Prägeschritt ein Fügen, insbesondere ein Verpressen von Haltering, Isolierring und Anschlusspin miteinander. Die Prägekraft kann beispielsweise in einem Bereich von 5 N bis 50 kN liegen, wobei der Prägeschritt nur einen einzigen Prägeschlag oder aber beliebig viele Prägeschläge umfassen kann.

Im Prägeschritt wird insbesondere ein Prägestempel auf die anzünderseitige Oberseite des Halterings, des Isolierrings und des Anschlusspins mit einer ausreichenden Schlagkraft verfahren, um diese Bauteile zu verformen.

Der Haltering und der Isolierring können auf einen Träger aufgelegt werden, der im Prägeschritt eine Gegenkraft zu einem in Axialrichtung verfahrenden Prägestempel liefert, der auf die anzünderseitigen Flächen von Haltering, Isolierring und das anzünderseitige Ende des Anschlusspins einwirkt.

Der Außenradius des Halterings vergrößert sich beim Prägeschritt bevorzugt nicht. Vorzugsweise ist ein den Haltering umgebender Gegenhalter vorgesehen, der ein Ausweichen des Halterings in Radialrichtung und ein Vergrößern des Außenradius des Halterings verhindert.

Wenn, wie oben beschrieben, der Isolierring zwei separate Durchbrüche aufweist, durch die jeweils ein Ende eines Anschlusspins ragt, so werden im selben Prägeschritt beide Anschlusspins mit dem Isolierring und mit dem Haltering verbunden. An der prinzipiellen Verfahrensweise ändert sich dabei nichts.

Die oben genannte Aufgabe wird auch mit einem Verfahren zur Herstellung eines Anzünders für einen Gasgenerator mit den in Anspruch 11 angegebenen Schritten erreicht. Bei diesem Verfahren zur Herstellung eines Anzünders für einen Gasgenerator werden die folgenden Schritte durchgeführt:
- Bereitstellen wenigstens eines ersten Kontaktabschnitts, wenigstens eines zweiten Kontaktabschnitts, eines Halterings aus einem Metall sowie eines Isolierrings aus einem Kunststoff,
- Ineinanderstecken des ersten Kontaktabschnitts, des Isolierrings und des Halterings, sodass der erste Kontaktabschnitt vom Isolierring und der Isolierring vom Halterring umgeben ist,
- Verprägen von Haltering, Isolierring und ersten Kontaktabschnitt in einem Prägeschritt, bei dem Haltering, Isolierring und erster Kontaktabschnitt unter Verformung zumindest des Halterings fest und spielfrei miteinander verbunden werden, wobei insbesondere im Prägeschritt eine in Axialrichtung wirkende Kraft auf den Haltering, den Isolierring und den ersten Kontaktabschnitt aufgebracht wird, und
- Verbinden des zweiten Kontaktabschnitts elektrisch leitend mit dem ersten Kontaktabschnitt, im Wesentlichen axial fluchtend, durch Verschweißen, Verlöten oder Verkleben, um aus dem ersten und zweiten Kontaktabschnitt wenigstens einen Anschlusspin auszubilden.

Wenn, wie oben beschrieben, der Isolierring zwei separate Durchbrüche aufweist, durch die jeweils ein erster Kontaktabschnitt ragt, so werden im selben Prägeschritt zwei erste Kontaktabschnitte mit dem Isolierring und mit dem Haltering verbunden. Danach wird jeweils ein zweiter Kontaktabschnitt elektrisch leitend mit dem jeweiligen ersten Kontaktabschnitt verbunden, im Wesentlichen axial fluchtend, durch Verschweißen, Verlöten oder Verkleben, um aus dem jeweils ersten und jeweils zweiten Kontaktabschnitt jeweils einen Anschlusspin auszubilden, sodass der Anzünder insgesamt zwei Anschlusspins aufweist. An der prinzipiellen Verfahrensweise ändert sich dabei nichts.

Wie oben bereits beschrieben, weisen eine äußere Umfangsfläche des Isolierrings und eine innere Umfangsfläche des Halterings vorzugsweise komplementäre Strukturierungen auf.

Gleiches gilt für eine äußere Umfangsfläche des Anschlusspins im Bereich des Isolierrings sowie eine innere Umfangsfläche des Isolierrings.

Vor dem Prägeschritt ist dabei vorteilhaft ein Abstand zwischen Isolierring und Haltering so groß, dass Isolierring und Haltering ohne Verformung ineinandergesteckt werden können, obwohl die Strukturierungen nicht hinterschnittfrei sein müssen. Auch zwischen Isolierring und Anschlusspin kann nach dem Zusammenstecken und vor dem Prägeschritt noch Spiel bestehen, sodass auch diese Bauteile ohne Verformung ineinandergesteckt werden können.

Die Form, Art und Größe der Strukturierungen zwischen Isolierring und Haltering und denen zwischen Anschlusspin und Isolierring können gleich oder unterschiedlich gewählt werden.

Die Strukturierungen an den Umfangsflächen des Halterings und des Anschlusspins lassen sich beispielsweise durch materialabtragende Bearbeitung, wie spanende Bearbeitung, Abtragung durch Laserstrahl, oder chemisch durch einen Ätzvorgang oder durch umformende Verfahren in die jeweiligen Oberflächen einbringen. Es ist auch möglich, urformende Verfahren zu verwenden und die Strukturierung direkt bei der Herstellung des jeweiligen Bauteils mit auszubilden. Dies wird insbesondere bei der Fertigung des Isolierrings aus Kunststoff bevorzugt.

Als Strukturierung kommt jede geeignete Geometrie infrage, z.B. korrespondierende Vorsprünge und Vertiefungen in Form von Noppen und Einbuchtungen mit runder, ovaler, langgestreckter oder polygonaler Umfangskontur, genauso wie Rippen und korrespondierende Nuten, die rein in Axialrichtung, rein in Radialrichtung, nach Belieben schräg zu diesen Richtungen oder gewellt verlaufen können. Auch Gewindeformen und andere spiralförmig verlaufende Linienstrukturen können verwendet werden. Die Oberfläche der Strukturierungen kann jeweils gerundet, gerade oder kantig gewählt werden.

Beim Prägeschritt werden die Strukturierungen von Isolierring und Haltering dann bevorzugt spaltfrei, insbesondere feuchtedicht und gas- bzw. luftdicht, ineinandergefügt, sodass nach dem Prägeschritt der Anschlusspin, der Isolierring und der Haltering fest, spalt- und spielfrei und nach Möglichkeit gas- bzw. luftdicht direkt miteinander verbunden sind.

Es ist auch denkbar, den aus Kunststoff bestehenden und damit einfacher zu verformenden Isolierring zunächst ohne oder mit in Radialrichtung flacheren Strukturierungen auszubilden, sodass die Strukturierungen am Isolierring erst während des Prägeschritts entstehen oder in ihren endgültigen Abmessungen ausgebildet werden.

Generell lassen sich der Haltering und der Anschlusspin beispielsweise durch Ziehen, Tiefzeihen, Stanzen, Umformen, Sintern, Metal Injection Molding, elektrochemische Abscheideverfahren oder im 3D-Druck herstellen.

Es hat sich als vorteilhaft erwiesen, wenn vor dem Prägeschritt eine axiale Länge des Halterings größer ist als eine axiale Länge des Isolierrings, wobei insbesondere der Haltering und der Isolierring axial derart zueinander ausgerichtet werden, dass die anzünderseitige Oberseite des Halterings die anzünderseitige Oberseite des Isolierrings überragt. Dadurch kann der sich dementsprechend ergebende Materialüberschuss vom Material des Halterings verwendet werden, um die innere Umfangsfläche des Halterings in Radialrichtung nach innen zu verschieben, sodass die Strukturierungen von Haltering und Isolierring ineinandergreifen. Vorzugsweise ist der Materialüberschuss so groß gewählt, dass auch eine Verformung des Isolierrings radial einwärts bewirkt wird, die die Strukturierungen an der inneren Umfangsfläche des Isolierrings und an der äußeren Umfangsfläche des Anschlusspins miteinander in Eingriff bringt.

Die Wandstärke des Isolierrings kann insbesondere zwischen 1 mm und 15 mm liegen. Die axiale Länge des Isolierrings kann insbesondere etwa 1 mm bis 10 mm betragen.

Der Innendurchmesser des Halterings kann beispielsweise etwa 1 mm bis 25 mm betragen, während der Außendurchmesser des Halterings 1,5 mm bis 50 mm betragen kann. Als Wandstärke ist ein Wert von 1 mm bis 25 mm vorstellbar. Die Höhe entspricht insbesondere der des Isolierrings und kann etwa zwischen 1 mm bis 10 mm gewählt werden, wobei ein anfänglicher, also vor einem ersten Prägeschritt ausgebildeter, Überstand der Höhe des Halterings etwa 10 % bis 20 % verglichen mit der Höhe des Isolierrings betragen kann.

Nach dem Prägeschritt oder nach Abschluss von mehreren Prägeschritten bildet generell die anzünderseitige Oberseite von Haltering, Isolierring und Anschlusspin eine im Wesentlichen ebene und glatte Oberfläche.

Es ist jedoch möglich, im Prägeschritt eine erhabene Struktur auf dieser anzünderseitigen Oberseite des Polkörpers und insbesondere auf der Oberfläche des Halterings, des Isolierrings und/oder des Anschlusspins bzw. des ersten Kontaktabschnitts zu erzeugen.

Die erhabene Struktur kann insbesondere ein Steg sein, der zwischen Anschlusspin und Haltering verläuft, oder, wenn zwei Anschlusspins vorgesehen sind, die den Isolierring durchgreifen, ein Steg in der Oberfläche des Isolierrings zwischen den beiden Anschlusspins.

Vorzugsweise wird im Falle des Vorhandenseins von lediglich einem einzigen Anschlusspin innerhalb des Isolierrings ein weiterer Anschlusspin an dem Haltering elektrisch leitend befestigt, insbesondere durch Schweißen oder Löten.

Für den Fall, dass der Isolierring nur eine Durchführungsöffnung aufweist, durch die sich ein einziger Anschlusspin erstreckt wird zwischen dem Anschlusspin und dem Haltering ein elektrisch leitfähiges Element, insbesondere ein Brückendraht, elektrisch leitend angeordnet, insbesondere verschweißt oder verlötet, wie es oben beschrieben ist. Statt eines Brückendrahts kann natürlich auch z.B. eine Leiterplatte, ein Chipelement, ein Dickschichtelement oder ein Dünnschichtelement verwendet werden, so wie dies aus dem Stand der Technik bekannt ist.

Für den Fall, dass der Isolierring zwei Durchführungsöffnungen aufweist, durch die sich zwei nebeneinander angeordneter Anschlusspins erstrecken, wird zwischen den beiden Anschlusspins das elektrisch leitfähige Element, insbesondere der Brückendraht, angeordnet.

Falls eine erhabene Struktur vorgesehen ist, liegt vorzugsweise das elektrisch leitfähige Element auf der erhabenen Struktur auf, wobei vorzugsweise in der Draufsicht die Breite der erhabenen Struktur um ein Vielfaches größer ist, als die Breite des elektrisch leitfähigen Elements, derart, dass sich entlang der Längserstreckung des elektrisch leitfähigen Elements ein Überstand der erhabenen Struktur ausbildet, sodass eine sichere bzw. ausreichend breite Auflage des elektrisch leitenden Elements auf der erhabenen Struktur gewährleistet ist.

Wie oben bereits erwähnt, kann der Prägeschritt mehrfache Prägeschläge umfassen, insbesondere bis zu mehreren hundert. Auf diese Weise lässt sich die Oberflächengüte verbessern und die Rauigkeit der Oberfläche verringern. Vorzugsweise werden solche mehrfache Prägeschritte vor der Montage des elektrisch leitfähigen Elements und vor der Montage eines weiteren Anschlusspins an den Haltering, im Falle des Vorhandenseins von lediglich einem einzigen Anschlusspin innerhalb des Isolierrings, durchgeführt.

Ein mehrfacher Prägeschlag kann gegebenenfalls auch nur im Bereich der erhabenen Struktur erfolgen.

Es ist auch denkbar, die erhabene Struktur erst in einem solchen Nachprägeschlag nach einem oder mehreren ersten Prägeschlägen, in denen der Anschlusspin, der Isolierring und der Haltering miteinander verbunden wurden, zu erzeugen.

Der fertig mit dem elektrisch leitfähigen Element montierte Polkörper wird mit einer ersten Kappe verbunden, welche mit einer verpressten pyrotechnischen Anzünderladung befüllt ist. Die erste Kappe kann vorzugsweise aus Metall, beispielsweise Stahl, bestehen, wobei sie mit einer oder mehreren unterschiedlichen Schichten einer gepressten pyrotechnischen Anzünderladung befüllt sein kann. In das offene Ende einer solchen vorbefüllten Kappe kann der oben beschriebene montierte Polkörper eingesetzt bzw. moderat eingepresst werden, wobei bevorzugt eine umlaufende Seitenwand des offenen Endes der ersten Kappe den Haltering des Polkörpers, insbesondere in Art und Weise einer Presspassung, umschließt und radial umlaufend an den Haltering befestigt, insbesondere angeschweißt ist. Dadurch wird insbesondere eine hermetische Abdichtung und eine gewisse mechanische Vorspannung bzw. Verdämmung der pyrotechnischen Anzünderladung gewährleistet. Hierbei ist ein guter inniger Kontakt des elektrisch leitfähigen Elements mit der pyrotechnischen Anzünderladung erforderlich. Die Platzierung des elektrisch leitfähigen Elements an der erhabenen Struktur kann dabei für eine erhöhte Anpresskraft und somit einen guten Kontakt sorgen.

Ein derartig vorgefertigter Anzünder mit der oben beschriebenen ersten Kappe aus Metall kann direkte für einen Einbau in ein Gasgeneratorgehäuse, insbesondere in ein Außengehäuse eines Gasgenerators, verwendet werden, indem er in ein solches fest eingebaut, insbesondere eingeschweißt wird. Bevorzugt kann ein solcher Anzünder mit einem Außenbereich der ersten Kappe in eine Aufnahme eines aus Metall bestehenden Gasdruckbehälters, in dem bereits im Ruhezustand, also im nicht bestimmungsgemäß ausgelöstem Zustand, ein Gas bzw. Gasgemisch unter einem Druck von 200 bis 600 bar gespeichert ist, eingepasst und an dieser Aufnahme gasdicht festgeschweißt sein.

Weiters ist es jedoch auch möglich, dass ein derartig vorgefertigter Anzünder zusätzlich zu der ersten Kappe aus Metall noch eine weitere Kappe, insbesondere eine zweite äußere Kappe, vorzugsweise aus einem elektrisch isolierendem Material, wie Kunststoff, aufweist. Eine solche zweite Kappe kann direkt auf die erste Kappe aufgesetzt bzw. aufgepresst werden und dabei die Außenkontur der ersten Kappe im Wesentlichen vollständig umschließen, um dabei selbst einen Teilbereich der Außenkontur eines derartig vorgefertigten Anzünders auszubilden. Insbesondere hat eine solche zweite Kappe die Aufgabe, den so vorgefertigten Anzünder nach außen hin elektrisch zu isolieren.

Generell ist hier unter dem Begriff Kappe, betreffend die erste und die zweite Kappe, ein Bauteil mit einer im Wesentlichen zylindrischen Seitenwand gemeint, wobei die Seitenwand durch einen Kappenboden axial geschlossen ist und eine Öffnung der Kappe dem Kappenboden axial gegenüber liegt.

Nach der Fertigstellung des Polkörpers durch das oben beschriebene Verfahren, nach Montage des Brückendrahts am Polkörper, und nach Anbringen der ersten und zweiten Kappe wird vorzugsweise die fest miteinander verbundene Baugruppe aus zwei Anschlusspins, dem Isolierring und dem Haltering mit einem Befestigungsabschnitt aus einem Kunststoff umspritzt oder umgossen, wobei zumindest die Anschlusspins abschnittsweise in dem Befestigungsabschnitt eingebettet werden. Die Öffnungen bzw. die Ränder der Öffnungen beider Kappen, insbesondere auch ein Teilbereich der axialen Seitenwand der zweiten Kappe, ausgehend von deren Öffnung hin zu deren Kappenboden, können gegebenenfalls ebenfalls in den Befestigungsabschnitt eingebettet werden.

Der zweite Anschlusspin kann entweder auch durch eine Durchführungsöffnung, insbesondere eine zweite Durchführung, im Isolierring geführt sein und im Prägeschritt mit dem Isolierring und mittels dem Isolierring mit dem Halterring verbunden werden, oder er kann nach dem Prägeschritt am Haltering angeschweißt werden.

Der Befestigungsabschnitt bildet, wie oben bereits beschrieben, eine Befestigung zur Fixierung des Anzünders zum einen in einem separaten Anzünderträger, welcher im Gasgenerator befestigbar ist, oder zum anderen direkt im Gasgenerator und dichtet den Polkörper zusätzlich gegen Feuchtigkeit ab.

Das Umgießen oder Umspritzen mit dem Befestigungsabschnitt erfolgt in einem separaten Arbeitsschritt. Hierbei kann ein unterschiedliches Kunststoffmaterial für den Isolierring und den Befestigungsabschnitt verwendet werden.

Es ist auch denkbar, den Befestigungsabschnitt so herzustellen, dass der Polkörper durch den Gieß- oder Spritzprozess mit dem Gasgenerator verbunden wird, also sozusagen den Befestigungsabschnitt in den Gasgenerator einzugie-βen bzw. einzuspritzen.

Die Erfindung wird nachfolgend anhand mehrerer Ausführungsbeispiele mit Bezug auf die beigefügten Zeichnungen näher beschrieben. In den Zeichnungen zeigen:
- Figur 1a einen erfindungsgemäßen Anzünder für einen Gasgenerator in einer schematischen Schnittdarstellung, hergestellt nach einem erfindungsgemäßen Verfahren;
- Figur 1b eine Baugruppe 11, umfassend den erfindungsgemäßen Anzünder 10 aus Figur 1a, eingesetzt in ein Bauteil eines Außengehäuses eines Gasgenerators unter Herstellung nach einem erfindungsgemäßen Verfahren;
- Figuren 2 bis 4 Schritte der Herstellung eines erfindungsgemäßen Anzünders nach einem erfindungsgemäßen Verfahren, gemäß einer ersten Ausführungsform;
- Figur 4a eine Schnittansicht eines erfindungsgemäßen Anzünders, hergestellt nach einem erfindungsgemäßen Verfahren, gemäß einer Variante;
- Figur 5 eine schematische Draufsicht auf eine anzünderseitige Oberseite eines fertiggestellten Polkörpers des erfindungsgemäßen Anzünders hergestellt nach dem erfindungsgemäßen Verfahren;
- Figur 6 einen fertiggestellten Polkörper eines erfindungsgemäßen Anzünders in einer schematischen Schnittansicht gemäß einer zweiten Ausführungsform, hergestellt nach einem erfindungsgemäßen Verfahren;
- Figur 7 den Polkörper aus Figur 6 in einer schematischen Draufsicht auf dessen anzünderseitige Oberseite;
- Figur 8 einen Haltering, einen Isolierring sowie ein oberes anzünderseitiges Ende eines Anschlusspins eines Polkörpers eines erfindungsgemä-βen Anzünders in einer schematischen perspektivischen Darstellung, vor dem Beginn der Fertigung des Anzünders in einem erfindungsgemäßen Verfahren, mit einer Strukturierung gemäß einer ersten Variante;
- Figur 9 die Anschlusspins des Polkörpers des erfindungsgemäßen Anzünders gemäß Figur 8;
- Figur 10 den aus den Komponenten der Figuren 8 und 9 fertiggestellten Polkörper, wobei Anschlusspin, Isolierring und Haltering eine erste Strukturierung tragen;
- Figuren 11 bis 13 verschiedene schematische Schnittansichten des Polkörpers aus Figur 10;
- Figur 14 eine schematische Draufsicht auf die anzünderseitige Oberseite des Polkörpers aus Figur 10;
- Figur 15 einen Haltering, einen Isolierring und ein oberes anzünderseitiges Ende eines Anschlusspins eines Polkörpers eines erfindungsgemä-βen Anzünders vor dem Beginn der Fertigung des Anzünders in einem erfindungsgemäßen Verfahren, in einer schematischen perspektivischen Darstellung, mit einer Strukturierung gemäß einer zweiten Variante;
- Figur 16 die beiden Anschlusspins des Polkörpers gemäß Figur 15;
- Figuren 17 bis 19 verschiedene schematische Schnittansichten des aus den Komponenten der Figuren 15 und 16 gefertigten Polkörpers;
- Figur 20 einen Haltering, einen Isolierring und ein oberes anzünderseitiges Ende eines Anschlusspins eines Polkörpers eines erfindungsgemä-βen Anzünders vor dem Beginn der Fertigung des Anzünders in einem erfindungsgemäßen Verfahren, in einer schematischen perspektivischen Darstellung, mit einer Strukturierung gemäß einer dritten Variante;
- Figur 21 die beiden Anschlusspins des Polkörpers gemäß Figur 20;
- Figuren 22 bis 24 verschiedene schematische Schnittansichten des aus den Komponenten der Figuren 20 und 21 gefertigten Polkörpers;
- Figur 25 einen Haltering, einen Isolierring und ein oberes anzünderseitiges Ende eines Anschlusspins eines Polkörpers eines erfindungsgemä-βen Anzünders vor dem Beginn der Fertigung des Anzünders in einem erfindungsgemäßen Verfahren, in einer schematischen perspektivischen Darstellung, mit einer Strukturierung gemäß einer vierten Variante;
- Figur 26 die beiden Anschlusspins des Polkörpers gemäß Figur 25;
- Figuren 27 bis 29 verschiedene schematische Schnittansichten des aus den Komponenten der Figuren 25 und 26 gefertigten Polkörpers;
- Figur 30 einen Haltering, einen Isolierring und ein oberes anzünderseitiges Ende eines Anschlusspins eines Polkörpers eines erfindungsgemä-βen Anzünders vor dem Beginn der Fertigung des Anzünders in einem erfindungsgemäßen Verfahren, in einer schematischen perspektivischen Darstellung, mit einer Strukturierung gemäß einer fünften Variante;
- Figur 31 die beiden Anschlusspins des Polkörpers gemäß Figur 30;
- Figuren 32 bis 34 verschiedene schematische Schnittansichten des aus den Komponenten der Figuren 30 und 31 gefertigten Polkörpers;
- Figuren 35 bis 44 schematische Darstellungen von weiteren Varianten für eine Strukturierung des Halterings, des Isolierrings und/oder des Anschlusspins;
- Figuren 45a bis 45d Varianten für Strukturierungen des Halterings und des Isolierrings bzw. des Isolierrings und des Anschlusspins;
- Figuren 46 bis 48 Schritte der Herstellung eines erfindungsgemäßen Anzünders nach einem erfindungsgemäßen Verfahren, gemäß einer weiteren Ausführungsform; und
- Figur 48a eine Schnittansicht eines erfindungsgemäßen Anzünders, hergestellt nach einem erfindungsgemäßen Verfahren, gemäß einer Variante.

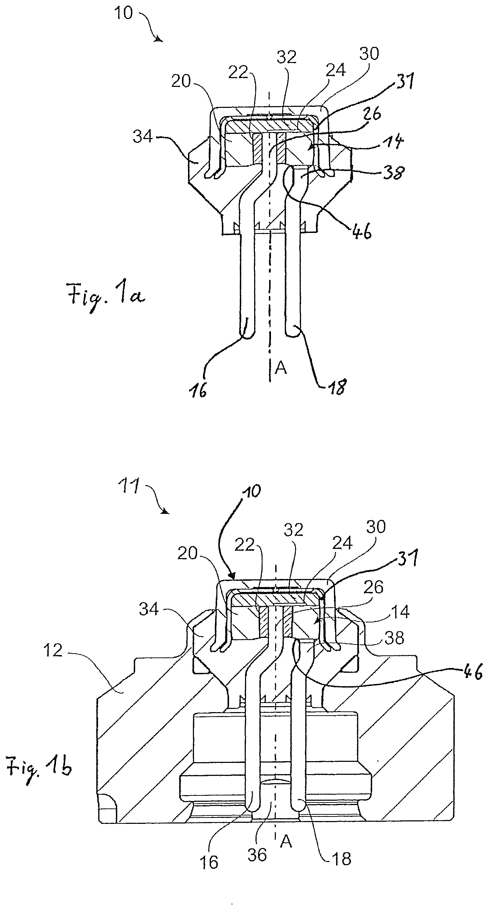

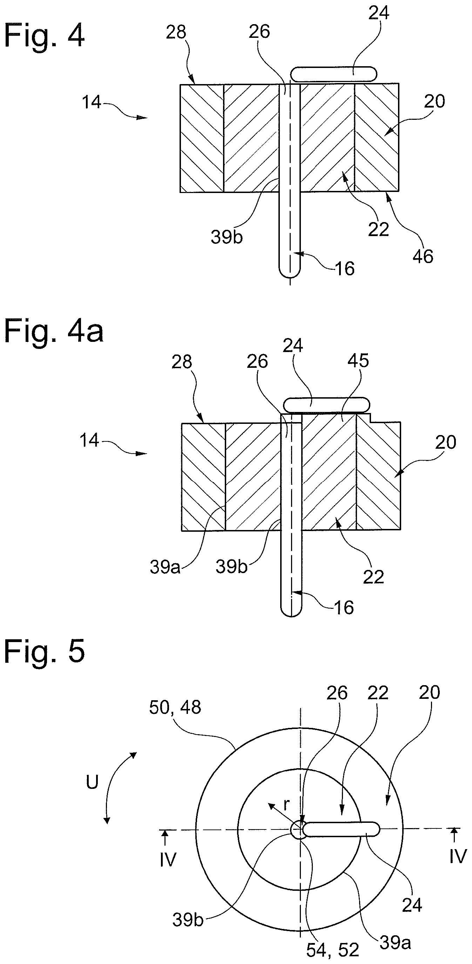

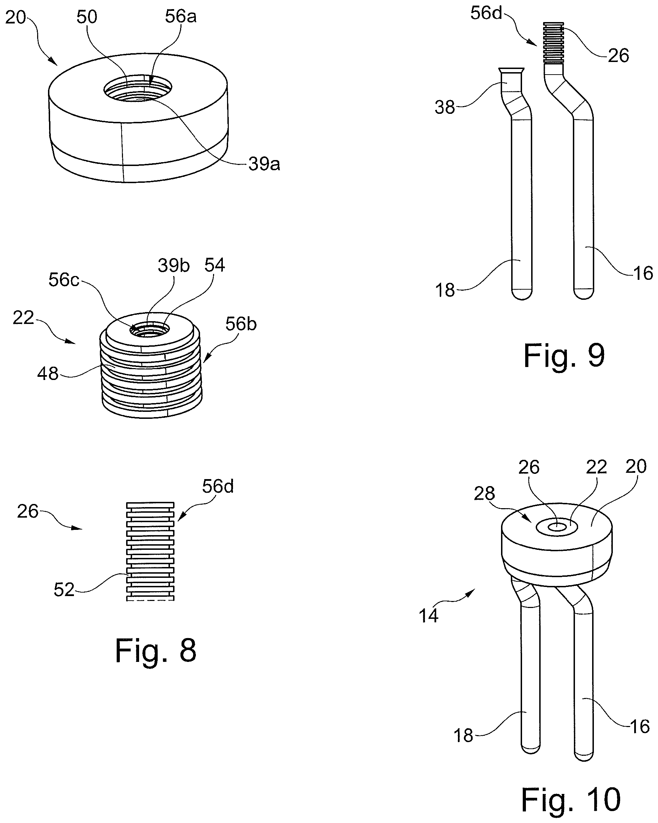

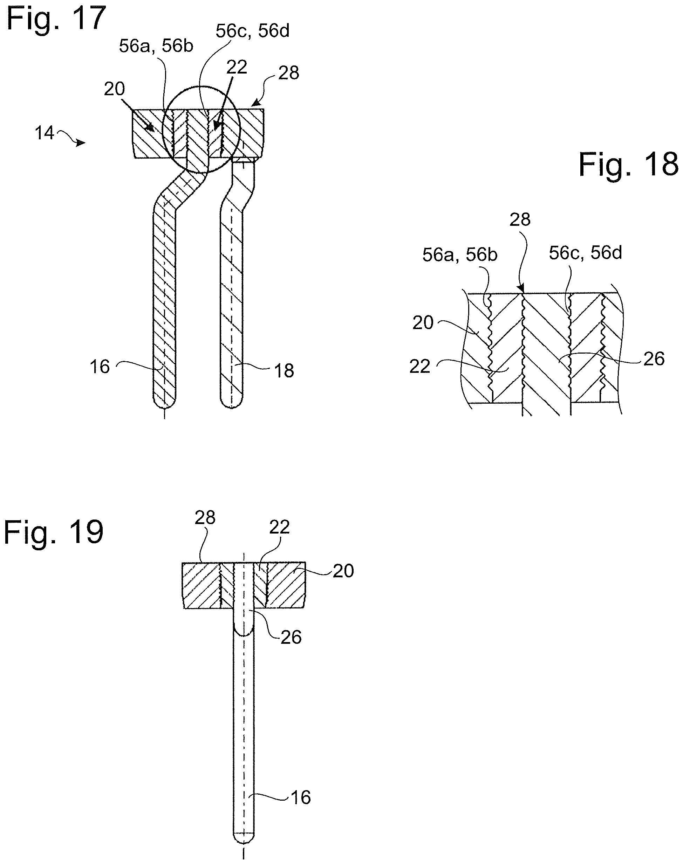

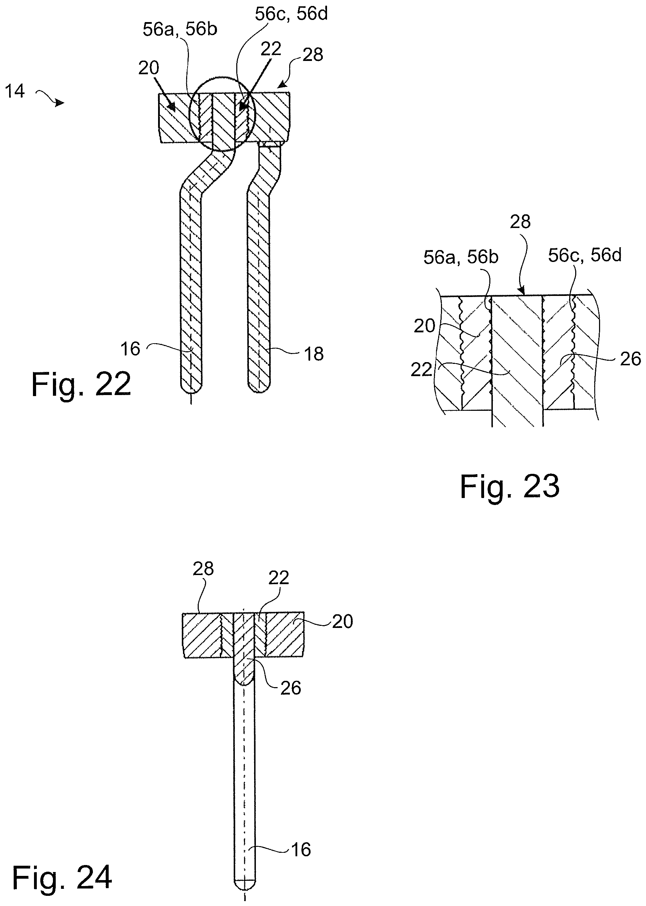

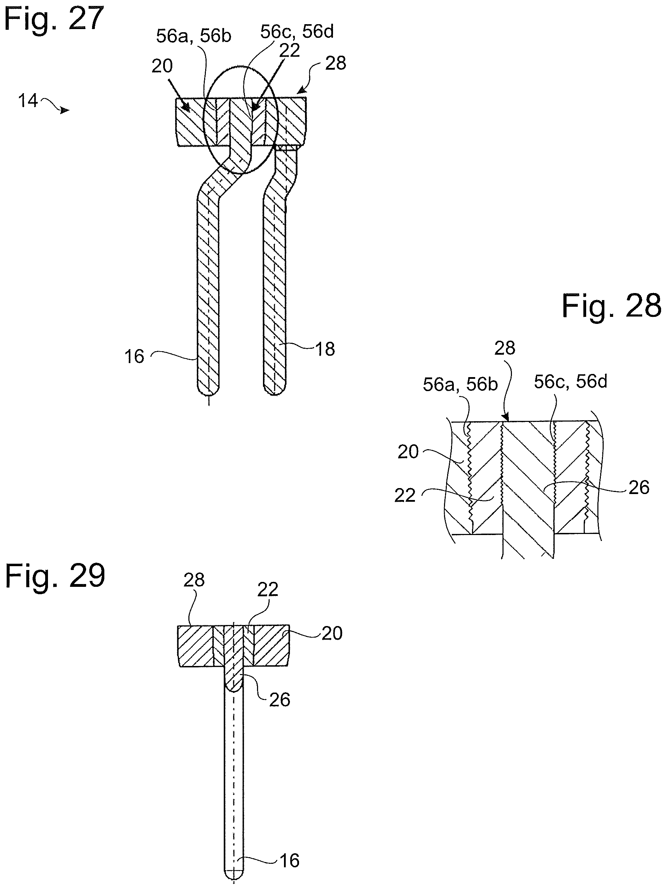

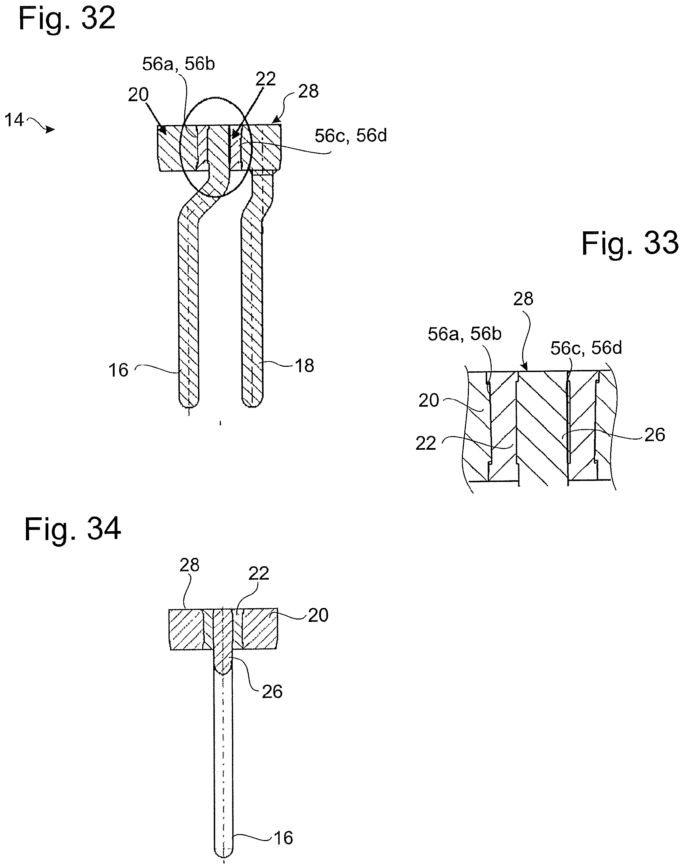

Figur 1a zeigt einen erfindungsgemäßen Anzünder 10, der einen Polkörper 14umfasst, welcher sich wiederum aus zwei elektrisch leitfähigen Anschlusspins 16, 18, insbesondere aus einem ersten Anschlusspin 16 und einem zweiten Anschlusspin 18, und einem aus Metall bestehenden Haltering 20 und einem aus Kunststoff bestehenden Isolierring 22 zusammensetzt (siehe im Detail Figuren 8 bis 34). Der Polkörper 14 weist eine anzünderseitige Oberseite 28 auf (siehe z.B. Figur 4), wobei diese Oberseite 28 zugleich auch als eine entsprechende anzünderseitige Oberseite 28 des Halterings 20, anzünderseitige Oberfläche 28 des Isolierrings 22 und anzünderseitige Oberseite 28 eines anzünderseitigen Endes 26 des Anschlusspins 16 aufgefasst werden kann. In anderen Worten, die anzünderseitige Oberseite 28 des Polkörpers 14 kann auch als eine Zusammenfassung der dort gebildeten einzelnen entsprechenden anzünderseitigen Oberseiten, nämlich die des Halterings 20, des Isolierrings 22 und des anzünderseitigen Endes 26 des Anschlusspins 16 verstanden werden. Der Einfachheit halber wird im Folgenden mitunter auch für den Begriff "anzünderseitige Oberseite" nur der verkürzte Begriff "Oberseite" verwendet. In dem Beispiel wie in Figur 1a dargestellt, wird auch ein elektrisch leitfähiges Element 24 mit einem spezifischen elektrischen Widerstand, das insbesondere als ein Brückendraht ausgeführt ist, als zu dem Polkörper 14 hinzugehörig betrachtet, wobei das elektrisch leitfähiges Element 24 sich zwischen dem oberen (in den Figuren), anzünderseitigen Ende 26 des Anschlusspins 16 und der anzünderseitigen Oberseite 28 des Halterings 20 erstreckt.

Das anzünderseitige Ende des Polkörpers 14 und insbesondere die gesamte Oberseite 28 des Halterings 20, des Isolierrings 22 sowie des Endes 26 des Anschlusspins 16 sind von einer ersten Kappe 31, welche bevorzugt aus Metall ist, komplett überdeckt, die in ihrem Inneren eine Anzündladung 32, insbesondere eine pyrotechnische Anzündladung, aufnimmt. Die Anzündladung 32 ist in direktem Kontakt mit dem elektrisch leitfähigen Element 24 sowie mit der Oberseite 28 des Polkörpers 14.

Das elektrisch leitfähige Element 24 ist beispielsweise wie herkömmlich bekannt ein Brückendraht, könnte aber auch ein anderes Bauteil sein, das durch Stromfluss zwischen den beiden Anschlusspins 16, 18 so weit erhitzbar ist, dass es die Anzündladung 32 anzünden kann.

Über die erste Kappe 31 ist in direktem Kontakt zu dieser eine zweite Kappe 30, welche bevorzugt aus einem nicht elektrisch leitenden Material wie z.B: Kunststoff ist, aufgesetzt bzw. aufgepresst. Die zweite Kappe 30 umschließt dabei die Außenkontur der ersten Kappe 31 im Wesentlichen vollständig und bildet damit auch eine äußere Kappe.

Der Anzünder 10 weist außerdem noch einen Befestigungsabschnitt 34 auf, der hier aus einem Kunststoff besteht und der einen mittleren Abschnitt der beiden Anschlusspins 16, 18 umgibt, sodass diese abschnittsweise mit direktem Kontakt zum Kunststoffmaterial des Befestigungsabschnitts 34 in diesen eingebettet und auch durch diesen fixiert sind. Ebenfalls ist ein Umfangsrand der zweiten Kappe 30, insbesondere ein freier Rand davon, und ein Teilbereich einer sich daran anschließenden axialen Seitenwand der zweiten Kappe 30 vollständig in das Material des Befestigungsabschnitts 34 eingebettet und durch dieses gegenüber der Umgebung abgedichtet.

Der Haltering 20, der Isolierring 22, das anzünderseitige Ende 26 des Anschlusspins 16 sowie das elektrisch leitfähige Element 24 und die Anzündladung 32 sind hier durch die zweite Kappe 30 und den Befestigungsabschnitt 34 vollständig umgeben und hermetisch, insbesondere luft- bzw. gasdicht, von der Umgebung abgeschlossen.

In diesem Beispiel ist ein anzünderseitiges Ende 38 des zweiten Anschlusspins 18 nur bis zur anzünderfernen Seite des Halterings 20 geführt und dort mit diesem elektrisch leitfähig verbunden, beispielsweise verschweißt oder verlötet. Als "anzünderferne Seite" des Halterings 20 ist hierbei diejenige Seite des Halterings 20 gemeint, die der anzünderseitigen Oberseite 28 des Halterings 20, an welcher das elektrisch leitfähige Element 24 angebracht ist, längsaxial gegenüber liegt. Konkret handelt es sich bei der anzünderfernen Seite des Halterings 20 um eine Unterseite 46 des Halterings 20.

Der Isolierring 22 besteht aus einem elektrisch nicht leitfähigen Kunststoffmaterial und trennt das anzünderseitige Ende 26 des Anschlusspins 16 vom metallenen Haltering 20 räumlich und isoliert diese Komponenten auch elektrisch gegeneinander. Der einzige elektrische Kontakt zwischen dem Haltering 20 und dem Anschlusspin 16 erfolgt über das elektrisch leitfähige Element 24 in einem nicht-aktivierten Zustand des Anzünders 10, bei dem das elektrisch leitfähige Element 24 (noch nicht) aktiviert ist, so wie in Figur 1a dargestellt.

Der Haltering 20 umgibt den Isolierring 22 radial umlaufend, wobei in Radialrichtung r die beiden Bauteile über ihren gesamten entsprechenden Umfang direkt aneinander anliegen bzw. sich dort kontaktieren. Anders ausgedrückt, liegt der Haltering 20 mit seiner radial umlaufenden Fläche, bezüglich seines Innendurchmessers, an der radial umlaufenden Fläche des Isolierrings 22, bezüglich dessen Außendurchmessers, an. Ferner umgibt der Isolierring 22 das Ende 26 des Anschlusspins 16 radial umlaufend. Auch diese Bauteile liegen in Radialrichtung r über ihren gesamten entsprechenden Umfang direkt aneinander an bzw. kontaktieren sich dort. Anders ausgedrückt, liegt der Isolierring 22 mit seiner radial umlaufenden Fläche, bezüglich seines Innendurchmessers, an der radial umlaufenden Fläche des Anschlusspins 16, bezüglich dessen Außendurchmessers, an.

Der Befestigungsabschnitt 34 bildet hier ein insbesondere vom Isolierring 22 separates Bauteil, das, wie weiter unten beschrieben wird, auch in einem separaten Arbeitsschritt gefertigt wird.

Figur 1b zeigt eine Baugruppe 11, umfassend den erfindungsgemäßen Anzünder 10, wie in Figur 1a dargestellt, eingesetzt in ein Gehäuse 12 eines nicht näher dargestellten Gasgenerators. Das dargestellte Gehäuse 12 kann auch als ein Bestandteil eines Gehäuses eines solchen Gasgenerators bzw. zumindest als ein Teilbereich eines solchen Gehäuses aufgefasst werden. Insbesondere kann das dargestellte Gehäuse 12 ein Teilbereich eines Außengehäuses eines solchen Gasgenerators darstellen, wobei das Gehäuse 12 vorzugsweise aus Metall gefertigt ist und der Anzünder 10 insbesondere durch einen umgebördelten bzw. umgebogenen kragenartigen Fortsatz des Gehäuses 12 in diesem fest gehaltert ist. Das Gehäuse 12 selbst kann auch in ein nicht dargestelltes weiteres Gehäuseteil, beispielsweise in ein, insbesondere rohrförmig geformtes, Außengehäuse eines solchen Gasgenerators eingesetzt, insbesondere an einem Endbereich eines solchen angeschweißt, werden.

Alternativ dazu ist es auch möglich, nur den Polkörper 14 des Anzünders 10 mittels des Befestigungsabschnitts 34 direkt an das Gehäuse 12 des Gasgenerators dadurch anzubinden, indem der Polkörper 14 an bzw. in das Gehäuse 12, insbesondere in eine endseitige Öffnung davon, mittels Kunststoffspritzen befestigt wird. Hierbei stellt der Befestigungsabschnitt 34 dann einen Teilbereich einer solchen Kunststoffumspritzung bzw. Kunstoffeinspritzung des Polkörpers 14 in das Gehäuse 12 dar. Hierbei kann ein oben beschriebener umgebördelter bzw. umgebogenen kragenartigen Fortsatz des Gehäuses 12 entfallen, da der Polkörper 14 nur durch das Ein- bzw. Anspritzen des Befestigungsabschnitts 34 in das Gehäuse 12 gehaltert werden kann.

Anstelle des Gasgenerators kann hier auch ein sogenannter Mikrogasgenerator oder auch Aktuator, der beispielsweise zum Anheben einer Motorhaube eines Fahrzeugs für ein Personenschutzsystem verwendet wird, verstanden werden, wobei das dargestellte Gehäuse 12 dann ein entsprechendes Gehäuse bzw. Gehäusebauteil eines solchen Mikrogasgenerators oder Aktuators darstellt.

Im Gehäuse 12 des Gasgenerators ist eine Steckeraufnahme 36 ausgebildet, über die die freien Enden der beiden Anschlusspins 16, 18 elektrisch kontaktiert werden können, um den Anzünder 10 zu aktivieren, also derart auszulösen, dass ein Anzünden der Anzündladung 32 und eine bestimmungsgemäße Anwendung des Gasgenerators ausgeführt werden kann.

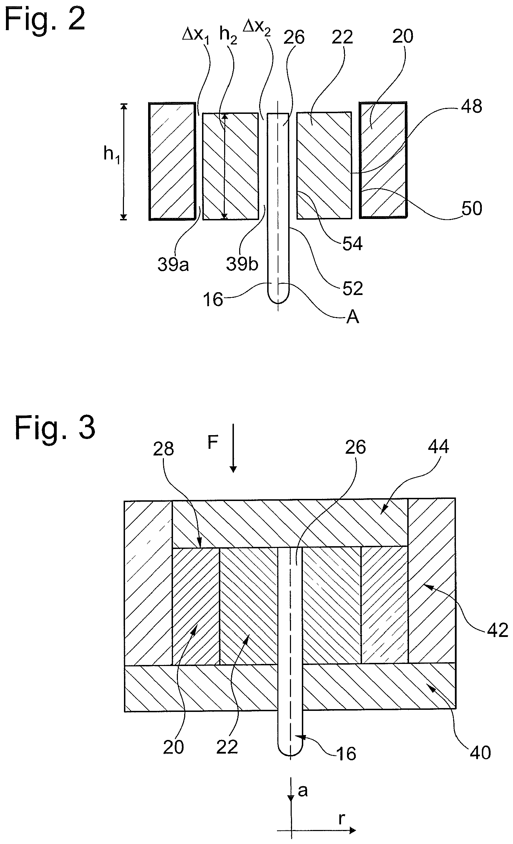

In den Figuren 2 bis 5 ist ein erfindungsgemäßes Herstellungsverfahren für den in Figur 1a dargestellten Anzünder 10 verdeutlicht.

In diesem Fall sind der Haltering 20, der Isolierring 22 sowie der Anschlusspin 16, insbesondere der erste Anschlusspin 16, separate, vorgefertigte Bauteile, die ein jedes Bauteil für sich, voneinander unabhängig, hergestellt und für das Herstellungsverfahren des erfindungsgemäßen Anzünders 10 bereitgestellt werden können.

Der Haltering 20 hat eine Ringform mit einer Durchführungsöffnung 39a. Der Außenumfang des Halterings 20 ist hier kreisförmig, kann aber auch eine beliebige andere Kontur aufweisen.

Der Isolierring 22 ist hier ebenfalls ringförmig mit einer einzigen Durchführungsöffnung 39b gestaltet.

Generell kann eine Wandstärke des Isolierrings 22 in radialer Richtung r kleiner, gleich groß oder größer gewählt sein als die des Halterings 20, sodass die Wandstärke des Isolierrings 22 unabhängig von der Wandstärke des Halterings auslegbar ist.

Die drei Komponenten Haltering 20, Isolierring 22 sowie Anschlusspin 16 werden wie in Figur 2 dargestellt ineinandergesteckt, sodass der Isolierring 22 innerhalb der Durchführungsöffnung 39a des Halterrings 20 und das Ende 26 des Anschlusspins 16 innerhalb der Durchführungsöffnung 39b angeordnet ist. Der Haltering 20 und der Isolierring 22 liegen dabei in diesem Beispiel konzentrisch zum anzünderseitigen Ende 26 des Anschlusspins 16 bzw. konzentrisch bezüglich des ersten Anschlusspins 16. Eine Längsachse A des Endes 26 des Anschlusspins 16, die auch als Längsachse A des ersten Anschlusspins 16 aufgefasst werden kann, fällt dabei mit einer Längsachse A des gesamten Anzünders 10 zusammen oder ist parallel zu dieser ausgerichtet, wie auch in Figur 1a und Figur 1b zu erkennen ist.

Entlang dieser Längsachse A bzw. parallel dazu ist die Längserstreckung h₁ des Halterings 20 etwas größer gewählt als die Längserstreckung h₂ des Isolierrings 22, sodass sich hier ein axialer Längenunterschied bzw. ein Überstand des Halterings 20 ergibt, welcher etwa 1 - 15 %, bezogen auf die Längserstreckung h₂ des Isolierrings 22, betragen kann. Die drei Komponenten Haltering 20, Isolierring 22 sowie Anschlusspin 16 werden hierbei derart zueinander, insbesondere axial zueinander, angeordnet, dass sich der Überstand des Halterings 20 an der Seite des anzünderseitigen Endes 26 des Anschlusspins 16 ausbildet bzw. dass die anzünderseitige Oberseite 28 des Halterings 20 die anzünderseitige Oberseite 28 des Isolierrings 22 und die des Anschlusspins 16 entgegen einer Axialrichtung a überragt. Die Axialrichtung a ist im Wesentlichen parallel zu der Längsachse A des Anschlusspins 16 bzw. zu der Längsachse A des gesamten Anzünders 10 und weist in Richtung des Endes des Anschlusspins 16, das dem anzünderseitigen Ende 26 des Anschlusspins 16 axial gegenüber liegt.

Der Haltering 20, der Isolierring 22 sowie das anzünderseitige Ende 26 des Anschlusspins 16 werden mit so viel Spiel bzw. Abstand Δx₁, Δx₂ ineinandergesteckt, dass bei keiner dieser Komponenten eine Verformung erfolgt (siehe beispielsweise Figur 2). In anderen Worten ausgedrückt, werden diese drei Komponenten Haltering 20, Isolierring 22 sowie Anschlusspin 16 mit ausreichenden sich in radialer Richtung erstreckenden Abständen Δx₁, Δx₂ jeweils zueinander positioniert, sodass ein verformungsloses Ineinanderstecken der drei Komponenten ermöglicht wird. Wieder in anderen Worten ist zwischen den drei Komponenten bei deren Bereitstellung bzw. Ineinanderstecken jeweils eine Spielpassung zueinander ausbildbar.

Wie in Figur 3 dargestellt, wird die in Figur 2 gezeigte Baugruppe auf einen Träger 40 gelegt, der eine Öffnung aufweist, durch die der Anschlusspin 16 hindurchragt, wobei der Anschlusspin 16 so in seiner Position fixiert wird, dass seine anzünderseitige Oberseite 28 auf gleicher Höhe mit der anzünderseitigen Oberseite 28 des Isolierrings 22 liegt. Ein Gegenhalter 42 umschließt den Haltering 20 in Umfangsrichtung und verhindert ein Ausweichen bzw. eine Bewegbarkeit oder Materialverdrückbarkeit des Halterings 20 in Radialrichtung r. Mit einem entlang der Axialrichtung a verfahrbaren Prägestempel 44 wird nun eine in Axialrichtung a wirkende Kraft F auf den Haltering 20, den Isolierring 22 sowie das Ende 26 des Anschlusspins 16 aufgebracht. Dies kann in einem einzigen Impuls oder beliebig vielen einzelnen Impulsen bzw. Prägeschritten mit vorbeschriebener Krafteinwirkung erfolgen. Durch wiederholte Krafteinwirkung lässt sich die anzünderseitige Oberseite 28 des Halterings 20, des Isolierrings 22 und des anzünderseitigen Endes 26 des Anschlusspins 16, also die gesamte anzünderseitige Oberseite 28 des Polkörpers stärker glätten und dadurch eine höhere Oberflächengüte erreichen.

In diesem Beispiel wird die Kraft F jeweils pulsartig bzw. schlagartig über einen kurzen Zeitraum aufgebracht. Dabei kann eine hohe Krafteinwirkung über einen kurzen Zeitraum erfolgen. Die Kraft F kann dabei bis zu etwa 50 kN betragen, aber auch geringer gewählt werden, z.B. bis zu etwa 5 N. Die Größe der Kraft F ist insbesondere abhängig von den Abmessungen des Anzünders 10 bzw. dessen Bestandteilen.

Durch eine derartige Krafteinwirkung bzw. einen derartigen Prägeschritt, wird ein Fügen bzw. Zusammenfügen, insbesondere ein Verpressen, von Haltering 20, Isolierring 22 und Anschlusspin 16 miteinander, erreicht.

Durch die vorbeschriebene Krafteinwirkung fließt das Material des Halterings 20 radial einwärts bzw. wird in Radialrichtung r verdrückt bzw. verdrängt und schiebt dabei auch den Isolierring 22 radial einwärts in Richtung des Anschlusspins 16. Dabei werden die Zwischenräume (siehe Figur 2) zwischen Isolierring 22 und Haltering 20 und Isolierring 22 und Anschlusspin 16 vollständig geschlossen. Insbesondere füllt dabei das über die Abmessung h₂ überstehende Material des Halterings 20 zumindest einen Teilbereich des Zwischenraums zwischen Isolierring 22 und Haltering 20 aus. Sowohl der Durchmesser der Durchführungsöffnung 39a des Halterings 20 als auch der Durchmesser der Durchführungsöffnung 39b des Isolierrings 22 verringern sich in diesem Prägeschritt bzw. werden bei mehreren Prägeschritten entsprechend sukzessive verringert.

Es wäre auch möglich, in dem vorbeschriebenen Prägeschritt bzw. wahlweise bzw. selektiv in nachfolgenden wiederholten Prägeschritten nicht nur eine rein axial wirkende Kraft F aufzubringen, sondern beispielsweise auch zusätzlich eine nach radial innen wirkende Kraft, die im Wesentlichen senkrecht zu der Außenwand des Gegenhalters 42 von radial außen nach radial innen gerichtet ist, aufzubringen.

Nach Abschluss des Prägeschritts bzw. von mehreren Prägeschritten sind das anzünderseitige Ende 26 des Anschlusspins 16, der Isolierring 22 und der Haltering 20 fest und spielfrei miteinander verbunden. Die Verbindung zwischen den einzelnen Bauteilen ist insbesondere feuchte- und luft- bzw. gasdicht.

Figur 4 zeigt die fest verbundene Baugruppe aus Haltering 20, Isolierring 22 und Anschlusspin 16.

Wie in Figur 4 erkennbar, wird in einem weiteren Arbeitsschritt nun das elektrisch leitfähige Element 24 auf der Oberseite 28 des Polkörpers 14 angeordnet und mit dem Anschlusspin 16 sowie dem Haltering 20 fest und elektrisch leitfähig verbunden, insbesondere verschweißt oder verlötet.

Außerdem kann das anzünderseitige Ende 38 des zweiten Anschlusspins 18 an der Unterseite 46 des Halterings 20 verschweißt werden. Dies ist in Figur 4 nicht explizit dargestellt, sondern dort ist lediglich mit dem Bezugszeichen 46 eine mögliche Stelle and der Unterseite 46 des Halterings 20 angedeutet, an der der zweite Anschlusspin 18 entsprechend befestigt werden kann. In Figur 1a ist eine mögliche Ausführungsform des erfindungsgemäßen Anzünders mit einem entsprechenden zweiten Anschlusspin 18, befestigt an der Unterseite 46 des Halterings 20, gezeigt.

Im Verlauf des Prägeschritts bzw. der mehreren wiederholten Prägeschritte wird die Rauigkeit der Oberseite 28 des Polkörpers 14 soweit wie möglich reduziert, sodass eine Oberfläche mit einer hohen Oberflächengüte entsteht. Die Oberseite 28 kann eine einzige glatte Ebene bilden.

Es ist jedoch auch möglich, die Oberseite 28 mit einer erhabenen Struktur 45 zu versehen, wobei die erhabene Struktur 45 ebenfalls im Prägeschritt bzw. durch mehrere hintereinander vorgenommene Prägeschritte erzeugt wird, insbesondere durch einen der Kontur der erhabenen Struktur 45 angepassten Prägestempel 44. Eine derartige erhabene Struktur 45 ist in Figur 4a dargestellt.

Es wäre auch möglich, einen zweiten Prägestempel 44 zu verwenden, der nur im Bereich der erhabenen Struktur 45 auf die Oberseite 28 einwirkt, um dort eine besonders geringe Rauigkeit zu erzeugen. Die erhabene Struktur 45 ist beispielsweise ein Steg, der sich ausschließlich unterhalb des leitfähigen Elements 24 vom anzünderseitigen Ende 26 des Anschlusspins 16 bis zum Haltering 20 erstreckt und auf dem das elektrisch leitfähige Element 24 aufliegt.

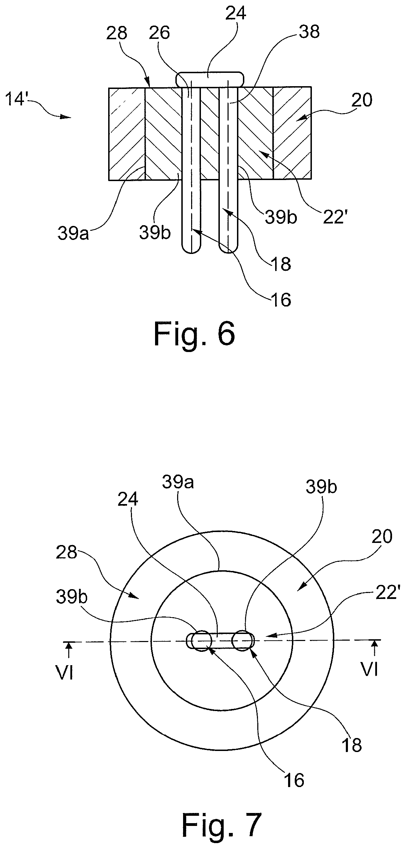

Figuren 6 und 7 zeigen eine zweite Ausführungsform eines Polkörpers 14' des Anzünders 10.

Im Unterschied zu der gerade beschriebenen Ausführungsform weist dort der Isolierring 22' zwei Durchführungsöffnungen 39b auf, durch die das anzünderseitige Ende 26 des ersten Anschlusspins 16 sowie das anzünderseitige Ende 38 des zweiten Anschlusspins 18 ragen. In diesem Fall ist der zweite Anschlusspin 18 nicht an der Unterseite 46 des Halterings 20 befestigt, sondern verläuft bis zur Oberseite 28 des Polkörpers 14' bzw. des Isolierrings 22'. Das elektrisch leitfähige Element 24 verbindet in diesem Fall die anzünderseitigen Oberseiten der beiden Anschlusspins 16, 18 auf der Oberseite 28 des Polkörpers 14' miteinander.

Der Haltering 20 kann identisch zur ersten Ausführungsform gestaltet sein. Es ist möglich, den Durchmesser des Halterings 20 sowie des Isolierrings 22' gegenüber der ersten Ausführungsform etwas zu vergrößern.

Auch hier kann eine erhabene Struktur unterhalb des elektrisch leitfähigen Elements 24 vorgesehen sein.

Die Kontur einer äußeren Umfangsfläche 48 (siehe Figur 2) des Isolierrings 22 (und jeweils analog des Isolierrings 22') entspricht in ihrer Form im Wesentlichen der Kontur einer inneren Umfangsfläche 50 der Durchführungsöffnung 39a des Halterings 20. Genauso entspricht eine Kontur einer äußeren Umfangsfläche 52 des anzünderseitigen Endes 26 des Anschlusspins 16 in ihrer Form im Wesentlichen der Kontur einer inneren Umfangsfläche 54 der jeweiligen Durchführungsöffnung 39b des Isolierrings 22, 22'. Die Konturen können in Draufsicht dabei im Wesentlichen kreisrund sein, aber auch andere Formen aufweisen.

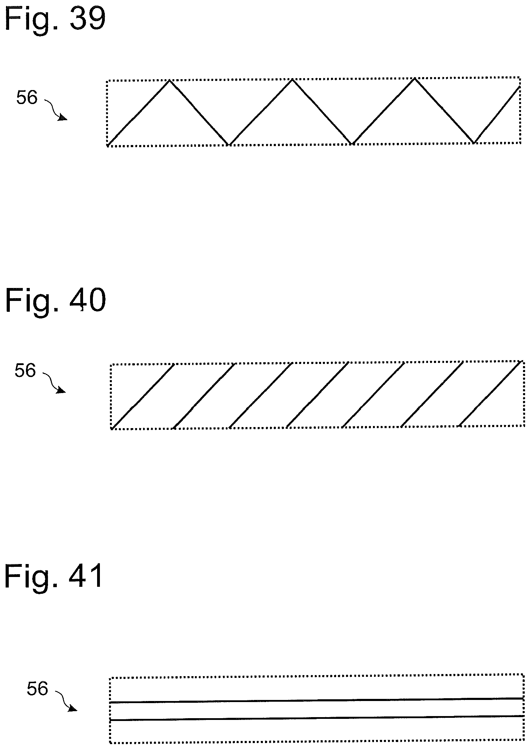

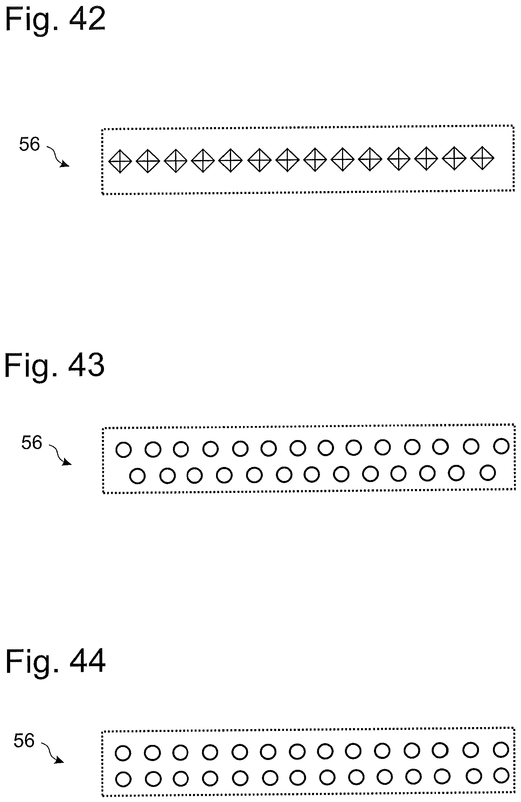

Die Flächen bzw. Umfangsflächen 48, 50, 52, 54 sind gemäß den in den Figuren 8 bis 45 gezeigten Varianten mit Strukturierungen 56a, 56b, 56c, 56d versehen.

Dabei weisen die direkt aneinandergrenzenden Flächen, also die äußere Umfangsfläche 48 des Isolierrings 22 und die innere Umfangsfläche 50 des Halterings 20 sowie die äußere Umfangsfläche 52 des Anschlusspins 16 und die innere Umfangsfläche 54 des Isolierrings 22 jeweils komplementäre Strukturierungen 56b, 56a bzw. 56d, 56c auf, die so ausgebildet sind, dass sie in Radialrichtung r ineinandergreifen können.

Die Strukturierungen 56a, 56b zwischen Haltering 20 und Isolierring 22 können dabei die gleiche Form aufweisen wie die Strukturierungen 56c, 56d zwischen Isolierring 22 und Anschlusspin 16, es können aber auch unterschiedliche Formen für diese Strukturierungen gewählt werden.

Während des Prägeschritts werden die Strukturierungen 56a, 56b und 56c, 56d aller strukturierten Flächen 48, 50, 52, 54 radial ineinandergefügt, sodass die jeweiligen Strukturierungen, insbesondere spielfrei, ineinandergreifen. Auf diese Weise werden der Haltering 20, der Isolierring 22 und der erste Anschlusspin 16 in Axialrichtung a und in Umfangsrichtung, also radial umlaufend, unverschieblich und fest miteinander verbunden.

Figur 10 zeigt den fertiggestellten Polkörper 14 nach dem Prägeschritt und nach dem Anschweißen des zweiten Anschlusspins 18 an den Haltering 20. Im fertigen Polkörper 14 sind die Strukturierungen 56a, 56b, 56c, 56d von außen nicht erkennbar.

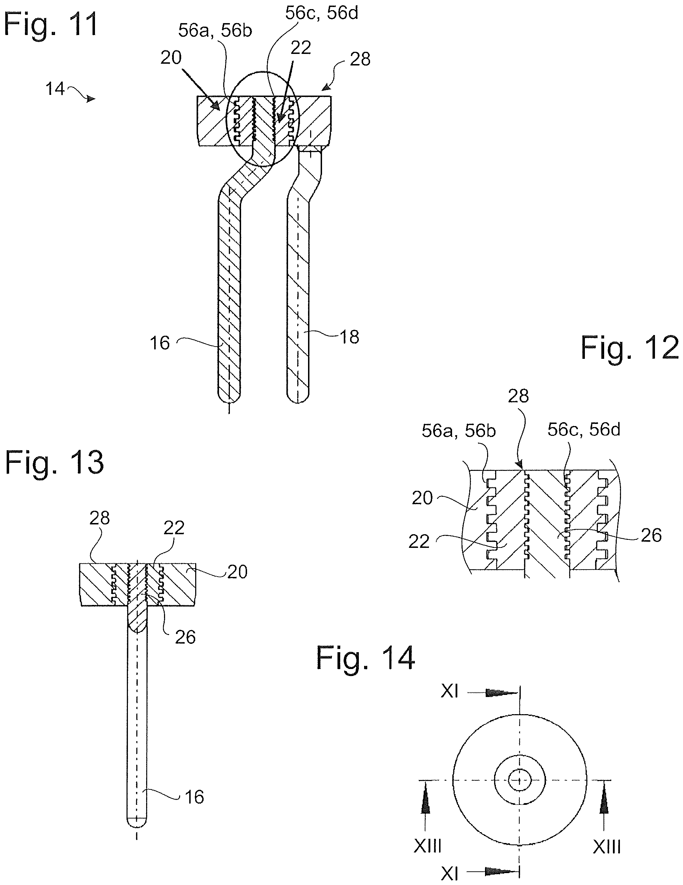

Die Figuren 11 bis 13 zeigen, wie nach dem Prägeschritt im fertigen Polkörper 14 die Strukturierungen 56a, 56b, 56c, 56d ineinandergreifen.

In diesem Beispiel bestehen sämtliche Strukturierungen 56a, 56b, 56c, 56d aus in Umfangsrichtung bzw. radial umlaufend verlaufenden in Axialrichtung a gleichmäßig voneinander beabstandeten, in Radialrichtung r vorstehenden Rippen. Bei gegenüberliegenden Flächen 48, 50 und 52, 54 treffen natürlich jeweils Rippen auf zwischen den Rippen gebildeten Rillen.

Sämtliche Strukturierungen 56a, 56b, 56c, 56d erstrecken sich hier im Wesentlichen über die gesamte axiale Länge der jeweiligen Fläche 48, 50, 52, 54.

Figur 12 zeigt einen vergrößerten Ausschnitt aus Figur 11. Figur 14 verdeutlicht die Schnittrichtung der Figuren 11 und 13.

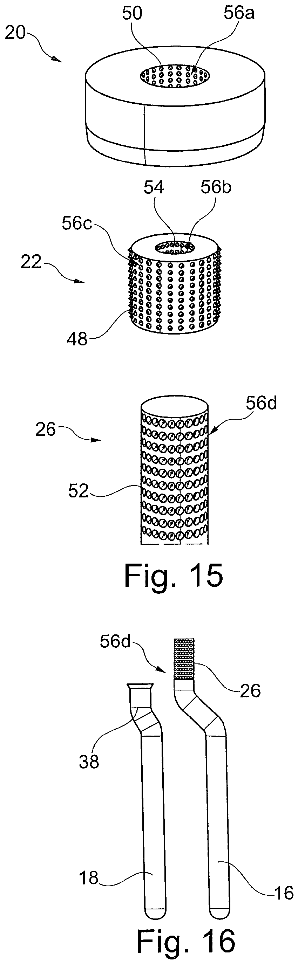

Analog zu der gerade beschriebenen Ausführungsform zeigen die Figuren 15 bis 19 einen Polkörper 14 mit einer anders ausgebildeten Strukturierung 56a, 56b, 56c, 56d.

Hier ist die Strukturierung durch halbkugelförmige Vertiefungen bzw. Vorsprünge, die einander gegenüberliegen, gebildet. Auch hier ist die Strukturierung 56a, 56b zwischen Haltering 20 und Isolierring 22 gleich gewählt wie die Strukturierung 56c, 56d zwischen Isolierring 22 und Anschlusspin 16.

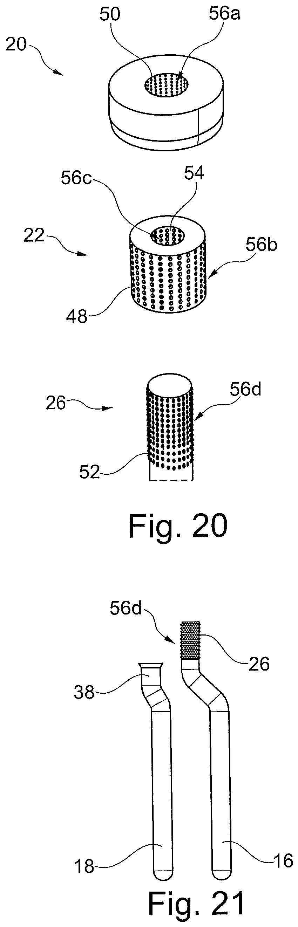

Die Figuren 20 bis 24 zeigen eine weitere Variante der Strukturierung 56a, 56b, 56c, 56d. In diesem Beispiel ist die Anordnung der Vertiefungen und der Vorsprünge gegenüber dem zuletzt beschriebenen Beispiel umgekehrt bzw. komplementär invers ausgebildet.

Während im gerade beschriebenen Beispiel die Vertiefungen an den Flächen 50 und 52 vorgesehen waren, sind hier die Vertiefungen an den Flächen 48 und 54 ausgebildet.

Für das erfindungsgemäße Verfahren ist die Zuordnung der jeweiligen Strukturierungen 56a, 56b, 56c, 56d zu den Flächen 48, 50, 52, 54 sowie auch die exakte Form der jeweils gewählten Strukturen von untergeordneter Bedeutung.

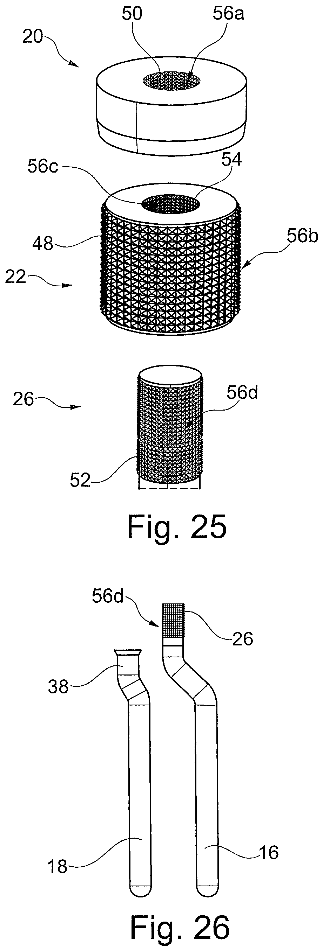

Das in den Figuren 25 bis 29 gezeigte Beispiel für die Strukturierungen 56a, 56b, 56c, 56d stellt eine Rändelstruktur dar, die auf allen vier Flächen 48, 50, 52, 54 ausgebildet ist.

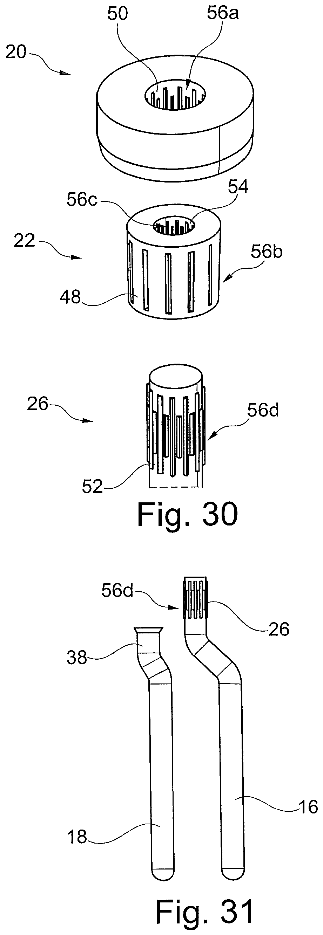

Die Figuren 30 bis 34 schließlich zeigen eine Strukturierung, die in Form von in Axialrichtung a verlaufenden, in Radialrichtung r hervorstehenden Rippen der Strukturierungen 56b, 56c und korrespondierenden Vertiefungen 56a, 56d ausgebildet ist.

Wie hier dargestellt ist, können einige der Strukturen nur in den Metallteilen des Halterings 20 sowie des Anschlusspins 16 ausgebildet sein und im Isolierring 22 fehlen. Hier entstehen die komplementären Strukturierungen dann erst im Verlauf des Prägeschritts, wenn sich das Material des Halterings 20 bzw. des Anschlusspins 16 in den Isolierring 22 durch die Presskraft eingräbt.

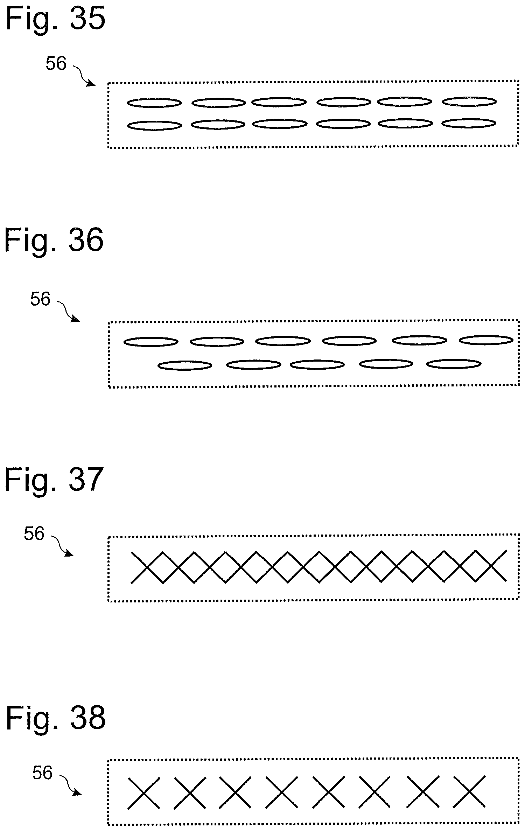

Die Figuren 35 bis 44 zeigen weitere Beispiele für Strukturierungen, die aus Gründen der Übersichtlichkeit nur mit dem Bezugszeichen 56 benannt werden und die jeweils als Vertiefung oder als erhabene Struktur an den einzelnen Flächen 48, 50, 52, 54 ausgebildet sein können.

Alle unterschiedlichen Strukturierungen 56 können selbstverständlich im Ermessen des Fachmanns nach Belieben untereinander ausgetauscht werden. Genauso können natürlich andere geeignete Strukturierungsmuster eingesetzt werden.

Allgemein können die einzelnen Bestandteile der Strukturierungen 56 ineinander übergehen oder voneinander abgegrenzt sein und insbesondere punkt- oder linienförmig gestaltet sein.

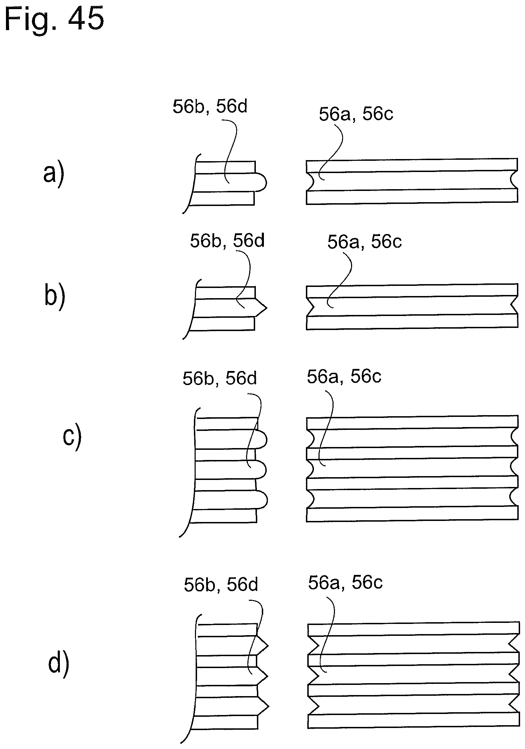

In den Figuren 45a bis 45d ist noch einmal veranschaulicht, wie die Strukturierungen 56a, 56b bzw. 56c, 56d der Flächen 48, 50 bzw. 52, 54 mit komplementären Vorsprüngen und Vertiefungen ausgebildet sind, sodass sie nach dem Prägeschritt spielfrei ineinandergreifen.

Es ist auch denkbar, den Isolierring 22 in einem Spritzguss- oder Gussprozess aus einem geeigneten Kunststoffmaterial zu fertigen, indem dieses in einen Zwischenraum zwischen der inneren Umfangsfläche 50 des Halterings 20 und der äußeren Umfangsfläche 52 des Endes 26 des Anschlusspins 16 verfüllt wird. In diesem Fall würde der Spritz- oder Gussschritt den Prägeschritt ersetzen.

In allen gezeigten Beispielen kann natürlich anstelle eines Isolierrings 22 mit nur einer Durchführungsöffnung 39b für das anzünderseitige Ende 26 des Anschlusspins 16 ein Isolierring 22' mit zwei Durchführungsöffnungen 39b verwendet werden, sodass auch das anzünderseitige Ende 38 des Anschlusspins 18 durch den Isolierring 22' hindurchgeführt ist.

Nachdem der Polkörper 14, 14' fertiggestellt ist und das leitfähige Element 24 montiert ist, werden die erste Kappe 31 und die zweite Kappe 30 auf die Oberseite 28 des Polkörpers 14 aufgesetzt, und die so entstandene Baugruppe wird in einem separaten Arbeitsschritt durch Gießen oder Spritzgießen mit dem Befestigungsabschnitt 34 versehen, um den Anzünder 10 fertigzustellen.

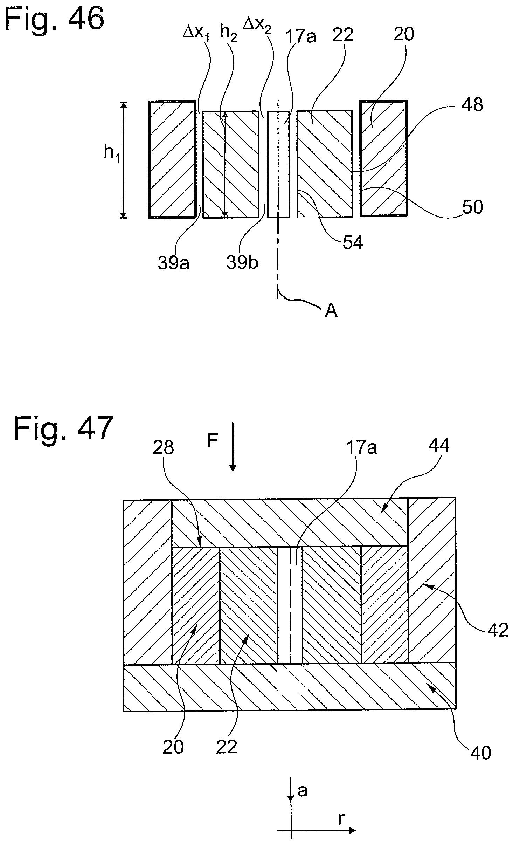

In den Figuren 46 bis 48a ist ein weiteres erfindungsgemäßes Herstellungsverfahren für einen erfindungsgemäßen Anzünder verdeutlicht. In diesem Fall entspricht der erfindungsgemäße Anzünder im Wesentlichen den in Figur 1a dargestellten Anzünder, wobei hier jedoch ein oder auch beide Anschlusspin(s) entlang ihrer gesamten axialen Längserstreckung geradlinig verlaufend ausgeführt sind. Anders ausgedrückt ergibt sich hier vorteilhaft keinerlei Krümmung oder Biegung entlang der Längsachse des bzw. der Anschlusspin(s).

Die Darstellungen in den Figuren 46 bis 48a entsprechen im Wesentlichen den der Figuren 2 bis 4a. Der hauptsächliche Unterschied diesbezüglich besteht bei den Figuren 46 bis 48a darin, dass der dortig dargestellte Anschlusspin 16 aus zwei Bauteilen, nämlich einem ersten Kontaktabschnitt 17a und einem zweiten Kontaktabschnitt 17b, aufgebaut ist. Beide Kontaktabschnitte 17a, 17b sind dabei als geradlinig, sich längs erstreckende, Bauteile aus Metall ausgeführt. Hierbei handelt es sich um im Wesentlichen zylinderförmige Drahtelemente, die an jeweils einer ihrer Stirnflächen miteinander verbunden, insbesondere verschweißt, verlötet oder verklebt, sind und aus ähnlichen bzw. gleichen geeigneten metallischen Materialien ausgebildet sind, wie der weiter oben beschriebene einstückig ausgebildete Anschlusspin 16.

Im Folgenden beschränkt sich die Beschreibung der Figuren 46 bis 48a auf die wesentlichen Unterschiede zu den weiter oben beschriebenen Figuren 2 bis 4a. Somit zeigt Figur 46 einen Haltering 20, Isolierring 22 und einen ersten Kontaktabschnitt 17a mit einer Längsachse A als separate, vorgefertigte Bauteile, die ein jedes Bauteil für sich, voneinander unabhängig, hergestellt und für das Herstellungsverfahren des erfindungsgemäßen Anzünders 10 bereitgestellt werden können. Auch hier werden diese separaten Bauteile zueinander zugeordnet, wie bereits in Figur 2 dargestellt, wobei hier jedoch die axiale Länge des einen ersten Kontaktabschnitts 17a der axialen Erstreckung des Isolierrings 22 bzw. der seiner Durchführungsöffnung 39a entspricht.

Die drei Komponenten Haltering 20, Isolierring 22 sowie erster Kontaktabschnitt 17a werden ineinandergesteckt, wie in Figur 46 dargestellt. Auch hier ergibt sich ein Überstand des Halterings 20 an der Seite des anzünderseitigen Endes 26 des ersten Kontaktabschnitts 17a bzw. die anzünderseitige Oberseite 28 des Halterings 20 überragt die anzünderseitige Oberseite des Isolierrings 22 und die ersten Kontaktabschnitts 17a. Auf der gegenüberliegenden Seite dazu, also auf der anzünderseitigen Unterseite des Halterings 20, schließt hier jedoch der erste Kontaktabschnitt 17a im Wesentlichen planar mit dem Haltering 20 ab. Anders ausgedrückt ergibt sich hier an der anzünderseitigen Unterseite des Halterings 20 kein axialer Überstand des ersten Kontaktabschnitts 17a.

Wie in Figur 47 dargestellt wird die in Figur 46 gezeigte Baugruppe auf einen Träger 40 gelegt, von einem Gegenhalter 42 umgeben und mit einem entlang der Axialrichtung a verfahrbaren Prägestempel 44 wird eine in Axialrichtung a wirkende Kraft F auf den Haltering 20, den Isolierring 22 sowie das entsprechende Ende des ersten Kontaktabschnitts 17a, welches bei dem fertig hergestellten Anzünder dem Ende 26 des Anschlusspins 16 entspricht, aufgebracht.

Die Darstellung in Figur 47 offenbart auch unmittelbar einen entscheidenden Vorteil der vorbeschriebenen Ausführungsform gemäß den Figuren 46 bis 48a, nämlich, dass eine derartige Fertigung, insbesondere ein Prägen bzw. Prägevorgang mittels des Prägestempels 44, wesentlich vereinfacht bzw. auch effizienter ist, als dies bei einer Ausführungsform bzw. einer entsprechenden Herstellung eines Anzünders gemäß Figuren 2 bis 4a der Fall ist. Indem hier (Figur 47) der Träger 40 keine Öffnung aufweisen muss, um einen axial abstehenden Anschlusspin 16 aufzunehmen (Figur 3) entfällt eine aufwändige Positionierung und Fixierung, wie es für den axial abstehenden Anschlusspin 16 (gemäß Figur 3) der Fall ist.

Nach Abschluss des Prägeschritts bzw. von mehreren Prägeschritten gemäß Figur 47 sind der erste Kontaktabschnitt 17a, der Isolierring 22 und der Haltering 20 fest und spielfrei miteinander verbunden. Die Verbindung zwischen den einzelnen Bauteilen ist insbesondere feuchte- und luft- bzw. gasdicht.

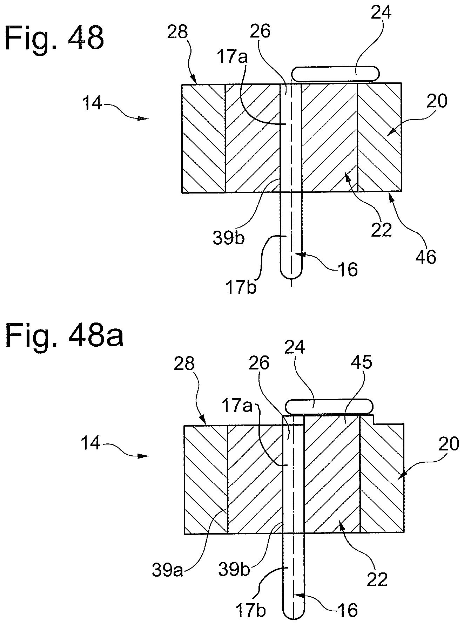

Figur 48 zeigt eine entsprechende fest verbundene Baugruppe aus Haltering 20, Isolierring 22 und ersten Kontaktabschnitt 17a. Allerdings wird nun hier in einem weiteren Herstellungsschritt ein zweiter Kontaktabschnitt 17b elektrisch leitend mit dem ersten Kontaktabschnitt 17a, im Wesentlichen axial fluchtend mit diesem, verbunden, um einen ersten Anschlusspin 16 herzustellen, welcher beide Kontaktabschnitte 17a, 17b umfasst. Konkret ist dabei der erste Kontaktabschnitt 17a im Wesentlichen zylinderförmig geradlinig aufgebaut und umfasst an seinen gegenüberliegenden Enden zwei Stirnseiten bzw. Stirnflächen, die im Wesentlichen parallel zueinander und senkrecht zu Längsachse A des ersten Kontaktabschnitts 17a ausgerichtet sind, wobei eine dieser Stirnflächen bereits das anzünderseitige Ende 26 des danach fertiggestellten ersten Anschlusspins 16 darstellt. An der dazu gegenüberliegenden Stirnfläche des ersten Kontaktabschnitts 17a wird nun der zweite Kontaktabschnitt 17b angebunden bzw. befestigt. Dazu weist der zweite Kontaktabschnitt 17b eine entsprechend komplementär ausgebildete Stirnfläche, insbesondere eine ebenfalls senkrecht zu der Längsachse des zweiten Kontaktabschnitts 17b ausgerichtete planare Fläche auf, sodass hier eine entsprechend einfache Verbindung der beiden Kontaktabschnitte 17a, 17b durch ein Verschweißen, Verlöten oder Verkleben möglich ist. Der zweite Kontaktabschnitt 17b weist an seinem dazu gegenüberliegenden Ende eine abgerundete, kalottenförmige Kontur auf, die dazu geeignet ist einen bekannten Stecker (nicht dargestellt) aufzunehmen, um an ein bekanntes Steuergerät (nicht dargestellt) angeschlossen zu werden. Kurz gesagt, bilden die beiden miteinander elektrisch leitend verbundenen kontaktabschnitte 17a, 17b einen ersten Anschlusspin 16 aus, wie er beispielsweise in Figur 4 als einstückiges Bauteil dargestellt ist.

Außerdem kann bezüglich der Figur 48 ähnlich bzw. analog, wie es bei der Ausführung zur Figur 4 weiter oben beschrieben ist, ein anzünderseitiges Ende 38 eines zweiten Anschlusspins 18 an der Unterseite 46 des Halterings 20 verschweißt werden. Dies ist in Figur 48 nicht explizit dargestellt, sondern dort ist lediglich mit dem Bezugszeichen 46 eine mögliche Stelle and der Unterseite 46 des Halterings 20 angedeutet, an der der zweite Anschlusspin 18 entsprechend befestigt werden kann.

Zudem ist es bezüglich Figur 48a auch möglich, dass, die Oberseite 28 mit einer erhabenen Struktur 45 versehen ist, wobei die erhabene Struktur 45 ebenfalls im Prägeschritt bzw. durch mehrere hintereinander vorgenommene Prägeschritte erzeugt wird, insbesondere durch einen der Kontur der erhabenen Struktur 45 angepassten Prägestempel 44.

Der wesentliche Vorteil eines Anzünders, wie er nach einem Verfahren gemäß den Figuren 46 bis 48a hergestellt ist, besteht also in anderen Worten ausgedrückt darin, dass die benötigte fertige Länge eines Anschlusspins erst in einem im Wesentlichen zum Ende des Herstellungsprozesses des Anzünders realisiert bzw. hergestellt werden muss. Während des vorgelagerten Herstellprozesses muss nicht mit einem bereits bezüglich seiner axialen Länge fertiggestellten Anschlusspin hantiert werden. Vorteilhaft kann hier anstelle mit einem fertigen Anschlusspin mit einem ersten Kontaktabschnitt hantiert werden, der optimal an ihn umgebende weitere Bauteile angepasst ist, insbesondere bezüglich seiner Längserstreckung, um so effektivere und günstigere vorgelagerte Herstellungsprozesse zu erreichen.

## Patentansprüche

1. Anzünder für einen Gasgenerator, mit einem Polkörper (14; 14'), der wenigstens einen Anschlusspin (16, 18), einen Haltering (20) sowie einen Isolierring (22) umfasst, wobei der Isolierring (22) den wenigstens einen Anschlusspin (16, 18) von dem Haltering (20) beabstandet und gegenüber diesem elektrisch isoliert, und wobei der Haltering (20) aus einem Metall und der Isolierring (22) aus einem Kunststoff besteht, **dadurch gekennzeichnet, dass** der Haltering (20), Isolierring (22) und wenigstens eine Anschlusspin (16, 18) in einem Prägeschritt, bei dem Haltering (20), Isolierring (22) und Anschlusspin (16, 18) unter Verformung zumindest des Halterings (20) fest und spielfrei miteinander verbunden sind, verprägt sind.

2. Anzünder nach Anspruch 1, **dadurch gekennzeichnet, dass** der Anzünder einen von dem Isolierring (22) separaten Befestigungsabschnitt (34) aus Kunststoff umfasst, in den zumindest der wenigstens eine Anschlusspin (16, 18) abschnittsweise eingebettet ist.

3. Anzünder nach einem der vorhergehenden Ansprüche, **dadurch gekennzeichnet, dass** eine äußere Umfangsfläche (48) des Isolierrings (22) und eine innere Umfangsfläche (50) des Halterings (20) und/oder eine äußere Umfangsfläche (52) des Anschlusspins (16) sowie eine innere Umfangsfläche (54) des Isolierrings (22) komplementäre Strukturierungen (56b, 56a, 56d, 56c) aufweisen.

4. Anzünder nach einem der vorhergehenden Ansprüche, **dadurch gekennzeichnet, dass** der Isolierring (22) eine Durchführungsöffnung (39b) aufweist, durch die sich ein anzünderseitiges Ende (26) des Anschlusspins (16) erstreckt wobei vorzugsweise ein weiterer Anschlusspin (18) an dem Haltering (20) elektrisch leitend befestigt ist.

5. Anzünder nach einem der vorhergehenden Ansprüche, **dadurch gekennzeichnet, dass** der Isolierring (22) zwei Durchführungsöffnungen (39b) aufweist, durch die sich die anzünderseitigen Enden (26, 38) zweier nebeneinander angeordneter Anschlusspins (16, 18) erstrecken.

6. Anzünder nach einem der Ansprüche 1 bis 5, **dadurch gekennzeichnet, dass** wenigstens ein Anschlusspin (16, 18) aus zwei separaten Bauteilen, einem ersten Kontaktabschnitt 17a und einem zweiten Kontaktabschnitt 17b, ausgebildet ist, welche fest miteinander elektrisch leitend verbunden, insbesondere verschweißt, verlötet oder verklebt, sind.

7. Verfahren zur Herstellung eines Anzünders (10) für einen Gasgenerator, insbesondere nach einem der vorhergehenden Ansprüche, mit den Schritten:
- Bereitstellen wenigstens eines Anschlusspins (16, 18), eines Halterings (20) aus einem Metall sowie eines Isolierrings (22) aus einem Kunststoff,
- Ineinanderstecken des Anschlusspins (16, 18), des Isolierrings (22) und des Halterings (20), sodass der Anschlusspin (16, 18) vom Isolierring (22) und der Isolierring (22) vom Halterring (20) umgeben ist, und
- Verprägen von Haltering (20), Isolierring (22) und Anschlusspin (16, 18) in einem Prägeschritt, bei dem Haltering (20), Isolierring (22) und Anschlusspin (16, 18) unter Verformung zumindest des Halterings (20) fest und spielfrei miteinander verbunden werden, und wobei im Prägeschritt eine in Axialrichtung (a) wirkende Kraft (F) auf den Haltering (20), den Isolierring (22) und den Anschlusspin (16, 18) aufgebracht wird.

8. Verfahren zur Herstellung eines Anzünders (10) für einen Gasgenerator, insbesondere nach Anspruch 7, mit den Schritten:
- Bereitstellen wenigstens eines ersten Kontaktabschnitts (17a), wenigstens eines zweiten Kontaktabschnitts (17b), eines Halterings (20) aus einem Metall sowie eines Isolierrings (22) aus einem Kunststoff,
- Ineinanderstecken des ersten Kontaktabschnitts (17a), des Isolierrings (22) und des Halterings (20), sodass der erste Kontaktabschnitt (17a) vom Isolierring (22) und der Isolierring (22) vom Halterring (20) umgeben ist,
- Verprägen von Haltering (20), Isolierring (22) und ersten Kontaktabschnitt (17a) in einem Prägeschritt, bei dem Haltering (20), Isolierring (22) und erster Kontaktabschnitt (17a) unter Verformung zumindest des Halterings (20) fest und spielfrei miteinander verbunden werden, wobei insbesondere im Prägeschritt eine in Axialrichtung (a) wirkende Kraft (F) auf den Haltering (20), den Isolierring (22) und den ersten Kontaktabschnitt (17a) aufgebracht wird, und
- Verbinden des zweiten Kontaktabschnitts (17b) elektrisch leitend mit dem ersten Kontaktabschnitt (17a), im Wesentlichen axial fluchtend, durch Verschweißen, Verlöten oder Verkleben, um aus dem ersten und zweiten Kontaktabschnitt (17a, 17b) wenigstens einen Anschlusspin (16) auszubilden.

9. Verfahren nach einem der Ansprüche 7 bis 8, **dadurch gekennzeichnet, dass** eine äußere Umfangsfläche (48) des Isolierrings (22) und eine innere Umfangsfläche (50) des Halterings (20) komplementäre Strukturierungen (56b, 56a) aufweisen, und dass vor dem Prägeschritt ein Abstand (Δx₁) zwischen Isolierring (22) und Haltering (20) so groß ist, dass Isolierring (22) und Haltering (20) ohne Verformung ineinandergesteckt werden können.

10. Verfahren nach Anspruch 9, **dadurch gekennzeichnet, dass** beim Prägeschritt die Strukturierungen (56a) von Isolierring (22) und Halterring (20) spaltfrei, insbesondere gasdicht, ineinandergefügt werden.

11. Verfahren nach einem der Ansprüche 7 bis 10, **dadurch gekennzeichnet, dass** vor dem Prägeschritt eine axiale Länge (h₁) des Halterings (20) größer ist als eine axiale Länge (h₂) des Isolierrings (22), wobei insbesondere der Haltering (20) und der Isolierring (22) axial derart zueinander ausgerichtet werden, dass die anzünderseitige Oberseite des Halterings (20) die anzünderseitige Oberseite des Isolierrings (22) überragt.

12. Verfahren nach einem der Ansprüche 7 bis 11, **dadurch gekennzeichnet, dass** im Prägeschritt eine erhabene Struktur (45) auf der anzünderseitigen Oberseite (28) des den Haltering (20), den Isolierring (22) und den Anschlusspin (16) beziehungsweise den ersten Kontaktabschnitt (17a) umfassenden Polkörpers (14; 14') erzeugt wird.

13. Verfahren nach einem der Ansprüche 7 bis 12, **dadurch gekennzeichnet, dass** der Prägeschritt mehrfach wiederholt wird.

14. Verfahren nach einem der Ansprüche 7 bis 13, **dadurch gekennzeichnet, dass** im Falle des Vorhandenseins von lediglich einem einzigen Anschlusspin (16) innerhalb des Isolierrings (22) ein weiterer Anschlusspin (18) an dem Haltering (20) elektrisch leitend befestigt wird, insbesondere durch Schweißen oder Löten.

15. Verfahren nach einem der Ansprüche 7 bis 14, **dadurch gekennzeichnet, dass** ein elektrisch leitfähiges Element (24), insbesondere ein Brückendraht, zwischen dem Anschlusspin (16) und dem Haltering (20) elektrisch leitend angeordnet, insbesondere verschweißt oder verlötet, wird.

16. Verfahren nach einem der Ansprüche 7 bis 15, **dadurch gekennzeichnet, dass** die fest miteinander verbundene Baugruppe aus zwei Anschlusspins (16, 18), dem Isolierring (22) und dem Haltering (20) mit einem Befestigungsabschnitt (34) aus einem Kunststoff umspritzt oder umgossen wird, in den zumindest die Anschlusspins (16, 18) abschnittsweise eingebettet werden.

## Claims

1. An igniter for a gas generator, comprising a pole body (14; 14') having at least one connection pin (16, 18), a retaining ring (20) and an insulation ring (22), wherein the insulation ring (22) spaces the at least one connection pin (16, 18) apart from the retaining ring (22) and electrically insulates it from the same, and wherein the retaining ring (20) consists of a metal and the insulation ring (22) consists of a plastic, **characterized in that** said retaining ring (20), said insulation ring (22), and at least one connection pin (16, 18) are compressed together during a compression step, during which the retaining ring (20), the insulation ring (22), and the connection pin (16, 18) are directly connected to one another securely, without gaps and play, at least by deformation of the retaining ring (20).

2. The igniter according to claim 1, **characterized in that** the igniter comprises a fastening portion (34) made from plastic which is separate from the insulation ring (22) and into which at least portions of the at least one connection pin (16, 18) are embedded.

3. The igniter according to any one of the preceding claims, **characterized in that** an outer peripheral surface (48) of the insulation ring (22) and an inner peripheral surface (50) of the retaining ring (20) and/or an outer peripheral surface (52) of the connection pin (16) and an inner peripheral surface (54) of the insulation ring (22) have complementary textures (56b, 56a, 56d, 56c).

4. The igniter according to any one of the preceding claims, **characterized in that** the insulation ring (22) includes a through-opening (39b) through which an igniter-side end (26) of the connection pin (16) extends, wherein preferably another connection pin (18) is fastened to the retaining ring (20) in an electrically conducting manner.

5. The igniter according to any one of the preceding claims, **characterized in that** the insulation ring (22) includes two through-openings (39b) through which the igniter-side ends (26, 38) of two juxtaposed connection pins (16, 18) extend.

6. The igniter according to any one of the claims 1 to 5, **characterized in that** at least one connection pin (16, 18) is formed of two separate component parts, a first contact portion (17a) and a second contact portion (17b), which are tightly connected, especially welded, soldered or glued, to each other in an electrically conducting manner.

7. A method for producing an igniter (10) for a gas generator, especially according to any one of the preceding claims, comprising the steps of:
- providing at least one connecting pin (16, 18), a retaining ring (20) consisting of a metal and an insulation ring (22) consisting of a plastic,
- fitting the connecting pin (16, 18), the insulation ring (22) and the retaining ring (20) inside one another so that the connecting pin (16, 18) is surrounded by the insulation ring (22) and the insulation ring (22) is surrounded by the retaining ring (20), and
- compressing the retaining ring (20), the insulation ring (22) and the connection pin (16, 18) in a compression step in which the retaining ring (20), the insulation ring (22) and the connecting pin (16, 18) are connected to one another securely and free from play while at least the retaining ring (20) is deformed, and wherein in the compression step a force (F) acting in the axial direction (a) is applied to the retaining ring (20), the insulation ring (22) and the first connecting pin (16, 18).

8. The method for producing an igniter (10) for a gas generator, especially according to claim 7, comprising the steps of:
- providing at least a first contact portion (17a), at least a second contact portion (17b), a retaining ring (20) consisting of a metal and an insulation ring (22) consisting of a plastic,
- fitting the first contact portion (17a), the insulation ring (22) and the retaining ring (20) inside one another so that the first contact portion (17a) is surrounded by the insulation ring (22) and the insulation ring (22) is surrounded by the retaining ring (20),
- compressing the retaining ring (20), the insulation ring (22) and the first contact portion (17a) in a compression step in which the retaining ring (20), the insulation ring (22) and the first contact portion (17a) are connected to one another securely and free from play while at least the retaining ring (20) is deformed, wherein especially in the compression step a force (F) acting in the axial direction (a) is applied to the retaining ring (20), the insulation ring (22) and the first contact portion (17a), and
- connecting the second contact portion (17b) in an electrically conducting manner to the first contact portion (17a), substantially in axial alignment, by welding, soldering or gluing, to form at least one connection pin (16) from the first and second contact portions (17a, 17b).

9. The method according to any one of the claims 7 to 8, **characterized in that** an outer peripheral surface (48) of the insulation ring (22) and an inner peripheral surface (50) of the retaining ring (20) have complementary textures (56b, 56a), and **in that** before the compression step a distance (Δx₁) between the insulation ring (22) and the retaining ring (20) is so large that the insulation ring (22) and the retaining ring (20) can be fitted inside each other without being deformed.

10. The method according to claim 9, **characterized in that** in the compression step the textures (56a) of the insulation ring (22) and the retaining ring (20) are nested in a gap-free, especially gastight, manner.

11. The method according to any one of the claims 7 to 10, **characterized in that**, before the compression step, an axial length (h₁) of the retaining ring (20) is larger than an axial length (h₂) of the insulation ring (22), wherein especially the retaining ring (20) and the insulation ring (22) are axially aligned relative to each other so that the igniter-side upper side of the retaining ring (20) projects from the igniter-side upper side of the insulation ring (22).

12. The method according to any one of the claims 7 to 11, **characterized in that** in the compression step a raised structure (45) is produced on the igniter-side upper side (28) of the pole body (14; 14') comprising the retaining ring (20), the insulation ring (22) and the connection pin (16) and, resp., the first contact portion (17a).

13. The method according to any one of the claims 7 to 12, **characterized in that** the compression step is repeated several times.

14. The method according to any one of the claims 7 to 13, **characterized in that**, in case merely one single connection pin (16) is present within the insulation ring (22), another connection pin (18) is fastened, especially by welding or soldering, in an electrically conducting manner.

15. The method according to any one of the claims 7 to 14, **characterized in that** an electrically conductive element (24), especially a bridge wire, is arranged, especially welded or soldered, between the connection pin (16) and the retaining ring (20) in an electrically conducting manner.

16. The method according to any one of the claims 7 to 15, **characterized in that** the tightly connected subassembly consisting of two connection pins (16, 18), the insulation ring (22) and the retaining ring (20) is surrounded by injection-molding or casting with a fastening portion (34) made from a plastic into which at least portions of the connection pins (16, 18) are embedded.

## Revendications

1. Allumeur pour un générateur de gaz, comprenant un corps polarisé (14 ; 14'), qui comprend au moins une broche de connexion (16, 18), une bague de retenue (20) ainsi qu'une bague isolante (22), pour lequel la bague isolante (22) espace la au moins une broche de connexion (16, 18) de la bague de retenue (20) et l'isole électriquement par rapport à celle-ci, et pour lequel la bague de retenue (20) est constituée d'un métal et la bague isolante (22) d'une matière plastique, **caractérisé en ce que** la bague de retenue (20), la bague isolante (22) et au moins une broche de connexion (16, 18) sont estampées au cours d'une étape d'emboutissage, au cours de laquelle la bague de retenue (20), la bague isolante (22) et la broche de connexion (16, 18) sont reliées entre elles de manière fixe et sans jeu en déformant au moins la bague de retenue (20).

2. Allumeur selon la revendication 1, **caractérisé en ce que** l'allumeur comprend une portion de fixation (34) en matière plastique séparée de la bague isolante (22), dans laquelle au moins la au moins une broche de connexion (16, 18) est encastrée partiellement.

3. Allumeur selon l'une des revendications précédentes, **caractérisé en ce qu'**une surface périphérique extérieure (48) de la bague isolante (22) et une surface périphérique intérieure (50) de la bague de retenue (20) et/ou une surface périphérique extérieure (52) de la broche de connexion (16) ainsi qu'une surface périphérique intérieure (54) de la bague isolante (22) présentent des structures complémentaires (56b, 56a, 56d, 56c).

4. Allumeur selon l'une des revendications précédentes, **caractérisé en ce que** la bague isolante (22) présente une ouverture de passage (39b) à travers laquelle s'étend une extrémité (26) côté allumeur de la broche de connexion (16), pour lequel une autre broche de connexion (18) est de préférence fixée de manière conductrice électriquement à la bague de retenue (20).

5. Allumeur selon l'une des revendications précédentes, **caractérisé en ce que** la bague isolante (22) présente deux ouvertures de passage (39b) à travers lesquelles s'étendent les extrémités (26, 38) côté allumeur de deux broches de connexion (16, 18) disposées côte à côte.

6. Allumeur selon l'une des revendications 1 à 5, **caractérisé en ce qu'**au moins une broche de connexion (16, 18) est formée de deux composants séparés, une première section de contact 17a et une deuxième section de contact 17b, lesquels sont reliés de manière fixe l'un à l'autre de manière électriquement conductrice, en particulier soudés, brasés ou collés.

7. Procédé de fabrication d'un allumeur (10) pour un générateur de gaz, notamment selon l'une des revendications précédentes, comprenant les étapes suivantes :
- préparation d'au moins une broche de connexion (16, 18), d'une bague de retenue (20) en un métal ainsi que d'une bague isolante (22) en une matière plastique,
- emboîtement de la broche de connexion (16, 18), de la bague isolante (22) et de la bague de retenue (20), de sorte que la broche de connexion (16, 18) est entourée par la bague isolante (22) et la bague isolante (22) par la bague de retenue (20), et
- emboutissage de la bague de retenue (20), de la baugue isolante (22) et de la broche de connexion (16, 18) au cours d'une étape d'emboutissage, au cours de laquelle la bague de retenue (20), la bague isolante (22) et la broche de connexion (16, 18) sont reliées entre elles de manière fixe et sans jeu en déformant au moins la bague de retenue (20), et pour lequel, au cours de l'étape d'emboutissage, une force (F) agissant dans la direction axiale (a) est appliquée sur la bague de retenue (20), la bague isolante (22) et la broche de connexion (16, 18).

8. Procédé de fabrication d'un allumeur (10) pour un générateur de gaz, notamment selon la revendication 7, comprenant les étapes consistant à :
- Préparation d'au moins une première section de contact (17a), d'au moins une deuxième section de contact (17b), d'une bague de retenu (20) en un métal ainsi que d'une bague isolante (22) en une matière plastique,
- emboîtement de la première partie de contact (17a), de la bague isolante (22) et de la bague de retenue (20), de sorte que la première partie de contact (17a) est entourée par la bague isolante (22) et la bague isolante (22) par la bague de retenue (20),
- emboutissage de la bague de retenue (20), de la bague isolante (22) et de la première section de contact (17a) au cours d'une étape d'emboutissage, au cours de laquelle la bague de retenue (20), la bague isolante (22) et la première section de contact (17a) sont reliées entre elles de manière fixe et sans jeu en déformant au moins la bague de retenue (20), pour lequel une force (F) agissant dans la direction axiale (a) est appliquée en particulier au cours de l'étape d'emboutissage sur la bague de retenue (20), la bague isolante (22) et la première section de contact (17a), et
- liaison de la deuxième section de contact (17b) de manière électriquement conductrice à la première section de contact (17a), sensiblement en alignement axial, par soudage, brasage ou collage, afin de former au moins une broche de connexion (16) à partir de la première et de la deuxième section de contact (17a, 17b).

9. Procédé selon l'une des revendications 7 à 8, **caractérisé en ce qu'**une surface périphérique extérieure (48) de la bague isolante (22) et une surface périphérique intérieure (50) de la bague de retenue (20) présentent des structures complémentaires (56b, 56a), et **en ce qu'**avant l'étape d'emboutissage, une distance (Δx₁) entre la bague isolante (22) et la bague de retenue (20) est suffisamment grande pour que la bague isolante (22) et la bague de retenue (20) puissent être emboîtées l'une dans l'autre sans déformation.

10. Procédé selon la revendication 9, **caractérisé en ce que**, lors de l'étape d'emboutissage, les structures (56a) de la bague isolante (22) et de la bague de retenue (20) sont assemblées l'une dans l'autre sans jeu, en particulier de manière étanche aux gaz.

11. Procédé selon l'une quelconque des revendications 7 à 10, **caractérisé en ce qu'**avant l'étape d'emboutissage, une longueur axiale (h₁) de la bague de retenue (20) est supérieure à une longueur axiale (h₂) de la bague isolante (22), pour lequel la bague de retenue (20) et la bague isolante (22) étant notamment orientées axialement l'une par rapport à l'autre de telle sorte que la face supérieure côté allumeur de la bague de retenue (20) dépasse de la face supérieure côté allumeur de la bague isolante (22).

12. Procédé selon l'une des revendications 7 à 11, **caractérisé en ce que**, lors de l'étape d'emboutissage, une structure en relief (45) est produite sur la face supérieure (28), située du côté de l'allumeur, du corps polarisé (14 ; 14') comprenant la bague de retenue (20), la bague isolante (22) et la broche de connexion (16) ou la première section de contact (17a).

13. Procédé selon l'une quelconque des revendications 7 à 12, **caractérisé en ce que** l'étape d'emboutissage est répétée plusieurs fois.

14. Procédé selon l'une quelconque des revendications 7 à 13, **caractérisé en ce que**, dans le cas où il n'y a qu'une seule broche de connexion (16) à l'intérieur de la bague isolante (22), une autre broche de connexion (18) est fixée de manière électriquement conductrice à la bague de retenue (20), notamment par soudage ou brasage.

15. Procédé selon l'une des revendications 7 à 14, **caractérisé en ce qu'**un élément électriquement conducteur (24), en particulier un fil de pontage, est disposé de manière électriquement conductrice, en particulier soudé ou brasé, entre la broche de connexion (16) et la bague de retenue (20).

16. Procédé selon l'une des revendications 7 à 15, **caractérisé en ce que** l'ensemble solidaire de deux broches de connexion (16, 18), de la bague isolante (22) et de la bague de retenue (20) est surmoulé ou injecté avec une section de fixation (34) en une matière plastique dans laquelle au moins les broches de connexion (16, 18) sont encastrées partiellement.
